# EUROPEAN PATENT APPLICATION

(11) **EP 4 299 599 A1**
(43) Date of publication of application: **03.01.2024**
(21) Application number: 21927983.3
(22) Date of filing: 06.08.2021
(51) Int. Cl.: C08F 2/44, C09D 11/101, C09D 11/102

(54) **ELECTRON BEAM-CURABLE COMPOSITION, AND FOOD PACKAGING MATERIAL**

(30) Priority: 26.02.2021 JP 2021029359
(71) Applicant: Toyo Ink SC Holdings Co., Ltd., Tokyo 104-8377 (JP); Toyo Ink Co., Ltd., Tokyo 104-8378 (JP)
(72) Inventor: TAKEDA Masashi, Tokyo 104-8378 (JP)
(74) Representative: SSM Sandmair
(86) International application number: PCT/JP2021/029434
(87) International publication number: WO 2022/180887

(57) **Abstract**

The invention provides an electron beam-curable composition comprising a (meth)acrylate component (A) containing one or more (meth)acrylate compounds (but excluding silicone-modified compounds), wherein the (meth)acrylate component (A) contains a (meth)acrylate compound (A-1) having a molecular weight of 500 or greater, and the amount of the (meth)acrylate compound (A-1) is at least 70% by mass of the total mass of the composition, and in the (meth)acrylate component (A), the amount of (meth)acrylate compounds having a molecular weight of less than 500 is less than 25% by mass of the total mass of the composition.

## Description

### TECHNICAL FIELD

One embodiment of the present invention relates to an electron beam-curable composition, and more specifically, to an electron beam-curable composition that can be used favorably as an electron beam-curable overcoat varnish. Another embodiment of the present invention relates to a food packaging material having a cured layer of the electron beam-curable composition on the surface.

### BACKGROUND ART

In recent years, from the viewpoints of shortening processing times by using instant drying, reducing environmental impact by not including volatile components (non-VOC), and achieving strong coating film characteristics via crosslinking reactions, the use of active energy ray curing techniques is expanding within the printing industry. Examples of the use of active energy ray curing in the printing industry include the practical application of inks and varnishes that utilize ultraviolet (UV) curing or electron beam (EB) curing. Among these, from the viewpoints of capital investment and running costs, ultraviolet (UV) curing has become mainstream. However, in many cases, the photopolymerization initiator required for the UV curing reaction is a comparatively low-molecular weight compound, and is prone to retention within the cured coating film. As a result, when a UV-curable composition is used in a food packaging application, migration of the harmful photopolymerization initiator into the packaged food is regarded as a problem. In contrast, the reaction configuration for EB curing, although typically utilizing a radical reaction similar to UV curing, employs a highenergy electron beam, and therefore does not require a photopolymerization initiator. For this reason, EB-curable compositions can be used particularly favorably for printing inks or varnishes designed for food packaging applications and the like.

The raw material configurations used in UV-curable and EB-curable compositions are substantially the same, with the exception of the presence or absence of photopolymerization initiators and sensitizers. In EB curing which does not require a photopolymerization initiator, although the photopolymerization initiator migration risk is avoided, the acrylate monomers and acrylate oligomers that represent the main components and other components such as inert resins and additives still function as target substances for migration evaluation. However, acrylate oligomers and inert resins having a molecular weight exceeding 1,000 have little migration risk, and are also thought to present a low risk of absorption within the body. Further, in the case of additives, provided the amount is kept to very low levels, the migration risk is low. In other words, in those cases where active energy ray-curable compositions including UV-curable compositions and EB-curable compositions are used in food packaging applications, the acrylate monomers represent an important target of migration evaluations.

In food packaging, the printed surface that is printed with an ink or varnish is often of a configuration that makes no direct contact with the food (non-food contact). In the food packaging configurations described above, the main migration mechanisms are penetration in which components within the coating film penetrated through the substrate, and offset in which the coating film makes contact with the non-printed surface (rear surface) of the substrate, and the effects of both causes must be included in an overall evaluation. In the case of the EB curing method, because surface curing is very favorable, the former penetration is the main cause of migration. Examples of methods that are effective in suppressing migration by penetration include increasing the thickness of the substrate itself, employing a substrate with superior barrier properties, and introducing a total barrier layer such as an aluminum foil, or a silica or alumina deposition layer. However, these methods are impractical in terms of recent environmental requirements for reductions in the amount of plastic used and recyclability. On the other hand, highly recyclable polyolefin films (such as polyethylene and polypropylene) have comparatively low glass transition temperatures, and therefore having inferior barrier properties and little migration suppression effect. Accordingly, there is a demand for technology capable of suppressing the migration from printed surfaces that have been printed with inks or varnishes.

Measures that are being investigated for reducing the amount of plastic used include improving recyclability by expanding the use of the above-mentioned polyolefin films, as well as substituting laminated configurations, which use back printing and represent the most common form of food packaging material, with surface printed configurations. Back printed laminated packaging materials generate the protective function required by the packaged contents by bonding a plurality of films together with an adhesive, and because the printed surface is sandwiched between film layers, the ink coating film has no particular strength requirements. On the other hand, in the case of surface printing, the ink coating film forms the outermost surface of the packaging material, and therefore sufficient coating film strength is required to withstand the content filling and transportation steps, as well as the usage environment. In surface printing, an overcoat varnish is generally applied to protect the ink coating film. However, if common solvent-based or aqueous-type heat-drying overcoat varnishes are used in food packaging applications, then adequate coating film strength cannot be achieved. Accordingly, there is a demand for an overcoat varnish that yields tough coating film characteristics, and can be used in all manner of in-line and off-line printing systems.

Swiss Ordinance RS817.023.21 Annex 10 discloses a positive list (of raw materials that may be used) for packaging materials containing non-food contact printed inks and varnishes, wherein the specific migration limit (SML) permitted for each raw material is prescribed on the basis of safety, and this ordinance has become an important indicator of worldwide standards.

However, because the degree of migration varies depending on factors such as the material and thickness of the substrate, the curing and drying levels, and the coating film thickness of the ink or varnish, conducting an integrated evaluation is difficult. As a result, the European Printing Ink Association (EuPIA) includes, within their guidelines, migration test methods for each printing method or content type, with the aim of developing an indicator for an overall evaluation method.

Various investigations have been conducted, from a variety of viewpoints, with the aim of addressing the migration issues associated with active energy ray-curable inks and varnishes, including Patent Documents 1, 2 and 3. Namely, Patent Document 1 proposes that by chemically bonding a photopolymerization initiator or sensitizer with a polyester resin, the amount used of the photopolymerization initiator or sensitizer can be reduced, and migration or volatilization of the photopolymerization initiator or sensitizer following the curing reaction can be reduced. Further, Patent Document 2 aims to reduce odor and migration by appropriate selection of the photopolymerization initiator in an active energy ray-curable ink. Moreover, Patent Document 3 discloses that by using a novel photopolymerization initiator based on a thioxanthone skeleton used as a sensitizer, both improved curability and lower migration can be achieved. Furthermore, Patent Documents 1, 2 and 3 all describe evaluations for UV-curable compositions, with the migration evaluation target mainly relating to the photopolymerization initiator or the sensitizer, and little evaluation of the acrylate monomers that represent the main components.

Patent Document 4 discloses a technique for suppressing the migration of other low-molecular weight acrylate monomers by adding an acrylate monomer having a high degree of alkoxylation. However, in this invention, no evaluations were conducted of the migration of the photopolymerization initiator and the acrylate monomer having a high degree of alkoxylation itself. Further, there is also no mention of evaluations of the cured coating film characteristics of inks or varnishes, which are important in determining practical applicability.

Patent Document 5 discloses a technique for accelerating EB curing and suppressing the migration of low-molecular weight acrylate monomers by adding a polyol. However, in this invention, no evaluations were conducted of the migration of the polyol and all acrylate monomers. Further, there is also no mention of evaluations of the cured coating film characteristics of inks or varnishes, which are important in determining practical applicability.

Patent Document 6 discloses a technique for suppressing the migration of low-molecular weight acrylate monomers by substituting the acrylate monomer with an alkoxylated compound not having an acryloyl group. However, in this invention, no evaluations were conducted of the migration of the alkoxylated compound and all acrylate monomers. Further, there is also no mention of evaluations of the cured coating film characteristics of inks or varnishes, which are important in determining practical applicability.

Patent Document 7 discloses a technique for improving the coating film characteristics such as the curability, adhesiveness and scratch resistance by adding a dimethylpolysiloxane to an EB-curable overcoat varnish. However, in this invention, no evaluations were conducted relating to the migration of acrylate monomers.

Patent Document 8 discloses a technique in which by conducting EB irradiation, a portion of the components undergo crosslinking, thereby improving the heat resistance. However, in this invention, a high dose of EB irradiation is required, which is unrealistic from a practical perspective. Further, with the exception of the heat resistance, there is no mention of evaluations of the cured coating film characteristics of inks or varnishes, which are important in determining practical applicability.

### PRIOR ART DOCUMENTS

### PATENT DOCUMENTS

Patent Document 1: JP 2005-154748 A
Patent Document 2: JP 2007-204543 A
Patent Document 3: JP 2009-221441 A
Patent Document 4: WO 2015/148094
Patent Document 5: WO 2020/012157
Patent Document 6: WO 2020/012160
Patent Document 7: JP 2020-147730 A
Patent Document 8: JP 2019-509196 A

### SUMMARY OF THE INVENTION

### PROBLEMS TO BE SOLVED BY THE INVENTION

As outlined above, among conventional active energy ray-curable printing inks and varnishes, there are no compositions that satisfy all of the characteristics required for overcoats in food packaging applications, and further improvements would be desirable. Among the various issues, there is a requirement for further investigation into the suppression of the migration of acrylate monomers, with an aim to improving the levels of migration caused by penetration.

Accordingly, in light of the circumstances described above, one embodiment of the present invention provides an electron beam-curable composition that can eliminate photopolymerization initiator migration, and can also reduce migration by (meth)acrylate compounds.

### MEANS TO SOLVE THE PROBLEMS

As a result of intensive research, the inventors of the present invention discovered that the issues described above could be addressed by using an electron beam-curable composition described below, and were thus able to complete the present invention. In other words, embodiments of the present invention relate to the aspects described below. However, the present invention is not limited to the following aspects, and includes various embodiments.

One embodiment of the present invention relates to an electron beam-curable composition comprising a (meth)acrylate component (A) containing one or more (meth)acrylate compounds (but excluding silicone-modified compounds), wherein
the (meth)acrylate component (A) contains a (meth)acrylate compound (A-1) having a molecular weight of 500 or greater, and the amount of the (meth)acrylate compound (A-1) is at least 70% by mass of the total mass of the composition, and
in the (meth)acrylate component (A), the amount of (meth)acrylate compounds having a molecular weight of less than 500 is less than 25% by mass of the total mass of the composition.

In the embodiment described above, the (meth)acrylate compound (A-1) preferably includes at least one compound selected from the group consisting of trimethylolpropane alkylene oxide-modified tri(meth)acrylates, urethane (meth)acrylates, polyester (meth)acrylates, and epoxy (meth)acrylates.

In the embodiment described above, the (meth)acrylate compound (A-1) preferably includes a trimethylolpropane alkylene oxide-modified tri(meth)acrylate in an amount of at least 50% by mass of the total mass of the composition.

In the (meth)acrylate compound (A-1), the amount of the trimethylolpropane alkylene oxide-modified tri(meth)acrylate having a molecular weight of 1,000 or greater is preferably less than 35% by mass of the total mass of the composition.

In the embodiment described above, the (meth)acrylate compound (A-1) preferably includes at least one compound selected from the group consisting of urethane (meth)acrylates, polyester (meth)acrylates and epoxy (meth)acrylates in an amount of at least 50% by mass of the total mass of the composition.

In one embodiment, the electron beam-curable composition of the embodiment described above preferably also comprises a solid wax (B).

The average particle size of the solid wax (B) is preferably within a range from 2 to 8 µm.

The amount of the solid wax (B) is preferably within a range from 0.1 to 3.0% by mass of the total mass of the composition.

In one embodiment, the viscosity of the electron beam-curable composition at 25°C is preferably not more than 1,000 Pa·s.

In one embodiment, the electron beam-curable composition preferably also comprises a (meth)acrylic-modified silicone-based compound. The amount of the (meth)acrylicmodified silicone-based compound is preferably within a range from 0.1 to 2.0% by mass of the total mass of the composition.

In one embodiment, the electron beam-curable composition preferably also comprises a leveling agent (C) containing an unreactive silicone-based compound. The amount of the unreactive silicone-based compound is preferably within a range from 0.1 to 2.0% by mass of the total mass of the composition.

In one embodiment, the electron beam-curable composition preferably comprises substantially no photopolymerization initiator.

In one embodiment, the electron beam-curable composition is preferably used as an electron beam-curable overcoat varnish.

In one embodiment, the electron beam-curable composition is preferably used in the formation of a surface layer of a food packaging material.

Another embodiment relates to a food packaging material comprising a substrate and a surface layer provided on top of the substrate, wherein the surface layer is a cured layer of the electron beam-curable composition of an embodiment described above.

This Application is related to the subject matter disclosed in prior Japanese Application 2021-029359 filed on February 26, 2021, the entire contents of which are incorporated by reference herein.

### EFFECTS OF THE INVENTION

The present invention is able to provide an electron beam-curable composition that can eliminate photopolymerization initiator migration, and can also reduce migration by (meth)acrylate compounds.

### EMBODIMENTS FOR CARRYING OUT THE INVENTION

Embodiments of the present invention are described below in detail. However, the constituent components and conditions and the like described below merely represent examples of embodiments in the present invention. Accordingly, the present invention is not limited to the content of these embodiments, provided the scope of the invention is not exceeded and the effects of the invention can be obtained. Further, unless specifically stated otherwise, "parts" indicates "parts by mass", and "%" indicates "% by mass".

### <Electron Beam-Curable Composition>

One embodiment of the present invention relates to an electron beam-curable composition comprising a (meth)acrylate component (A) containing one or more (meth)acrylate compounds (but excluding silicone-modified compounds), wherein
the (meth)acrylate component (A) contains a (meth)acrylate compound (A-1) having a molecular weight of 500 or greater, and the amount of the (meth)acrylate compound (A-1) is at least 70% by mass of the total mass of the composition, and
in the (meth)acrylate component (A), the amount of (meth)acrylate compounds having a molecular weight of less than 500 is less than 25% by mass of the total mass of the composition.

### ((Meth)acrylate Component (A))

In this description, "(meth)acrylic" includes both "acrylic" and "methacrylic", and "(meth)acrylate" includes both "acrylate" and "methacrylate". Further, "PO" represents "propylene oxide", and "EO" represents "ethylene oxide".

The electron beam-curable composition that represents one embodiment of the present invention comprises one or more (meth)acrylate compounds (but excluding silicone-modified compounds) as the (meth)acrylate component (A). In the present invention, a single (meth)acrylate compound (excluding silicone-modified compounds) may be used alone, or a combination of two or more such compounds may be used.

In this description, the (meth)acrylate compound (excluding silicone-modified compounds) is a compound having at least one polymerizable (meth)acryloyl group (sometimes referred to as a functional group) per molecule, and having no silicone-modified skeleton within the structure. Further, the (meth)acrylate compound may adopt any form selected from among monofunctional or polyfunctional (meth)acrylate monomers, (meth)acrylate oligomers and (meth)acrylate polymers. These (meth)acrylate compounds are described below in further detail.

### ((Meth)acrylate Monomers)

In one embodiment, the electron beam-curable composition preferably comprises a monofunctional or polyfunctional (meth)acrylate monomer as the (meth)acrylate compound. In the present invention, the term "monomer" means a compound corresponding with the smallest structural unit that constitutes an oligomer or polymer.

Examples of the (meth)acrylate monomer include monofunctional (meth)acrylate monomers having one (meth)acryloyl group within the molecule. Specific examples include 2-ethylhexyl (meth)acrylate, 2-hydroxyethyl (meth)acrylate, 2-hydroxypropyl (meth)acrylate, β-carboxyethyl (meth)acrylate, 4-tert-butylcyclohexanol (meth)acrylate, tetrahydrofurfuryl acrylate, alkoxylated tetrahydrofurfuryl acrylate, caprolactone (meth)acrylate, lauryl (meth)acrylate, stearyl (meth)acrylate, isoamyl (meth)acrylate, phenoxyethyl (meth)acrylate, isodecyl (meth)acrylate, 3,3,5-trimethylcyclohexanol (meth)acrylate, cyclohexyl (meth)acrylate, isobornyl (meth)acrylate, norbornyl (meth)acrylate, dicyclopentanyl (meth)acrylate, dicyclopentenyl (oxyethyl) (meth)acrylate,1,4-cyclohexanedimethanol (meth)acrylate, cyclic trimethylolpropane formal (meth)acrylate, benzyl (meth)acrylate, EO-modified nonylphenol acrylate, 2-methyl-2-ethyl-1,3-dioxoran-4-yl)methyl acrylate, and acryloylmorpholine.

Other examples of the (meth)acrylate monomer include difunctional (meth)acrylate monomers. Specific examples include 1,3-butylene glycol di(meth)acrylate, 1,4-butanediol di(meth)acrylate, 3-methyl-1,5-pentanediol di(meth)acrylate, 1,6-hexanediol di(meth)acrylate, 1,9-nonanediol di(meth)acrylate, 1,10-decanediol di(meth)acrylate, 1,2-dodecanediol di(meth)acrylate, neopentyl glycol di(meth)acrylate, polyethylene glycol di(meth)acrylate, polypropylene glycol di(meth)acrylate, hydroxypivalic acid neopentyl glycol di(meth)acrylate, dipropylene glycol di(meth)acrylate, tripropylene glycol di(meth)acrylate, EO-modified 1,6-hexanediol di(meth)acrylate, PO-modified neopentyl glycol di(meth)acrylate, (neopentyl glycol-modified) trimethylolpropane di(meth)acrylate, dimethyloltricyclodecane di(meth)acrylate, EO-modified bisphenol A di(meth)acrylate, PO-modified bisphenol A di(meth)acrylate, cyclohexanedimethanol di(meth)acrylate, dimethyloltricyclodecane di(meth)acrylate, and dicyclopentanyl di(meth)acrylate.

Further examples of the (meth)acrylate monomer include trifunctional (meth)acrylate monomers having three (meth)acryloyl groups within the molecule. Specific examples include trimethylolpropane tri(meth)acrylate, EO-modified trimethylolpropane tri(meth)acrylate, PO-modified trimethylolpropane tri(meth)acrylate, ε-caprolactone-modified tris-(2-acryloxyethyl)isocyanurate, ethoxylated isocyanuric acid tri(meth)acrylate, tris(2-hydroxyethyl)isocyanurate tri(meth)acrylate, and pentaerythritol tri(meth)acrylate.

Additional examples of the (meth)acrylate monomer include tetrafunctional (meth)acrylate monomers having four (meth)acryloyl groups within the molecule, such as pentaerythritol tetra(meth)acrylate, EO-modified pentaerythritol tetra(meth)acrylate, PO-modified pentaerythritol tetra(meth)acrylate, ditrimethylolpropane tetra(meth)acrylate, EO-modified ditrimethylolpropane tetra(meth)acrylate, and PO-modified ditrimethylolpropane tetra(meth) acrylate,
pentafunctional (meth)acrylate monomers having five (meth)acryloyl groups within the molecule, such as dipentaerythritol penta(meth)acrylate, EO-modified dipentaerythritol penta(meth)acrylate, and PO-modified dipentaerythritol penta(meth)acrylate, and
hexafunctional (meth)acrylate monomers having six (meth)acryloyl groups within the molecule, such as dipentaerythritol hexa(meth)acrylate, EO-modified dipentaerythritol hexa(meth)acrylate, and PO-modified dipentaerythritol hexa(meth)acrylate.

### ((Meth)acrylate Oligomers, Polymers)

In one embodiment, the electron beam-curable composition preferably comprises a (meth)acrylate oligomer or a (meth)acrylate polymer as the (meth)acrylate compound. A (meth)acrylate oligomer or (meth)acrylate polymer means an oligomer or polymer derived from a monomer having at least a (meth)acryloyl group within the molecule. In one embodiment, the (meth)acrylate compound preferably comprises a (meth)acrylate oligomer. In the present invention, the term "oligomer" describes a polymer having a comparatively low degree of polymerization, with structural units based on 2 to 100 monomer molecules. A (meth)acrylate oligomer has a higher molecular weight than a (meth)acrylate monomer, and is able to significantly reduced the risk of migration.

Examples of the (meth)acrylate oligomer include urethane (meth)acrylates, polyester (meth)acrylates, and epoxy (meth)acrylates. A single oligomer may be used alone, or a combination of two or more oligomers may be used.

### (Epoxy (Meth)acrylates)

The epoxy (meth)acrylate may be, for example, an epoxy (meth)acrylate formed as the reaction product of the glycidyl group within an epoxy resin and a (meth)acrylic acid having a carboxyl group. Other examples include epoxy (meth)acrylates that are reaction products of a resin having an acidic group such as a carboxyl group and a (meth)acrylate compound having a glycidyl group. Both these types of epoxy (meth)acrylates have an unsaturated double bond. Specific examples of the former include epoxy (meth)acrylates prepared by adding (meth)acrylic acid to a bisphenol A epoxy resin, and epoxy (meth)acrylates prepared by adding (meth)acrylic acid to a novolac epoxy resin.

### (Urethane (Meth)acrylates)

Examples of urethane (meth)acrylates include urethane (meth)acrylates obtained by reacting a polyisocyanate and a hydroxyl group-containing (meth)acrylate, urethane (meth)acrylates obtained by reacting a hydroxyl group-containing (meth)acrylate with an isocyanate group-containing urethane prepolymer prepared by reacting a polyol and a polyisocyanate under conditions that provide excess isocyanate groups, and urethane (meth)acrylates obtained by reacting a (meth)acrylate having an isocyanate group with a hydroxyl group-containing urethane prepolymer prepared by reacting a polyol and a polyisocyanate under conditions that provide excess hydroxyl groups.

Conventional compounds may be use as the above polyisocyanate, and examples include aromatic diisocyanates, aliphatic diisocyanates and alicyclic diisocyanates.

Examples of the aromatic diisocyanates include 1,5-naphthylene diisocyanate, 4,4'-diphenylmethane diisocyanate (MDI), 4,4'-diphenyldimethylmethane diisocyanate, 4,4'-dibenzyl isocyanate, dialkyldiphenylmethane diisocyanate, tetraalkyldiphenylmethane diisocyanate, 1,3-phenylene diisocyanate, m-tetramethylxylylene diisocyanate, 1,4-phenylenediocyanate, and tolylene diisocyanate.

Examples of the aliphatic diisocyanates include butane-1,4-diisocyanate, hexamethylene diisocyanate, isopropylene diisocyanate, methylene diisocyanate, 2,2,4-trimethylhexamethylene diisocyanate, and lysine diisocyanate.

Examples of the alicyclic diisocyanates include cyclohexane-1,4-diisocyanate, hydrogenated xylylene diisocyanate, isophorone diisocyanate, dicyclohexylmethane-4,4'-diisocyanate, 1,3-bis(isocyanatomethyl)cyclohexane, methylcyclohexane diisocyanate, norbornane diisocyanate, and dimer diisocyanate prepared by modifying the carboxyl groups of dimer acid with isocyanate groups.

Among these compounds, an aromatic diisocyanate and/or an aliphatic diisocyanate is preferred. Preferred compounds among those compounds listed above include tolylene diisocyanate, isophorone diisocyanate, xylylene diisocyanate, hydrogenated xylylene diisocyanate, hexamethylene diisocyanate, and the isocyanurate of hexamethylene diisocyanate.

### (Polyester (Meth)acrylates)

In the present invention, examples of polyester (meth)acrylates include compounds obtained by polycondensation of a polybasic acid and a polyhydric alcohol using a conventional method. The molecular weight and the amount of terminal hydroxyl groups or carboxyl groups may be adjusted by altering the blend ratio between the amount of carboxyl groups and the amount of hydroxyl groups.

For example, in those cases where the amount of carboxyl groups contained within the polybasic acid is greater than the amount of hydroxyl groups contained within the polyhydric alcohol, the terminal functional groups are carboxyl groups, and by conducting a condensation reaction with the hydroxyl groups of a hydroxyl group-containing (meth)acrylate, the target polyester (meth)acrylate can be obtained.

Examples of the above polybasic acid include aliphatic, alicyclic and aromatic compounds, and any of these compounds may be used without any particular restrictions. Examples of the aliphatic polybasic acids include oxalic acid, malonic acid, succinic acid, adipic acid, sebacic acid, azelaic acid, suberic acid, maleic acid, chloromaleic acid, fumaric acid, dodecanedioic acid, pimelic acid, citraconic acid, glutaric acid, itaconic acid, succinic anhydride, maleic anhydride, fatty acids and fatty acid-derived dimer acids, and either these aliphatic dicarboxylic acids or the anhydrides thereof may be used. Among the various options, polyester acrylates having a structural unit derived from at least one polybasic acid selected from among adipic acid, succinic acid, azelaic acid, sebacic acid, fatty acids, modified fatty acids and fatty acid-derived dimer acids are preferred.

Further, examples of the preferred polyhydric alcohols include difunctional aliphatic or alicyclic alcohols such as ethylene glycol, propylene glycol, dipropylene glycol, diethylene glycol, triethylene glycol, propylene glycol, dipropylene glycol, tripropylene glycol, butylene glycol, 3-methyl-1,5-pentanediol, 2,4-diethyl-1,5-pentanediol, 2-methyl-1,8-octanediol, 3,3'-dimethylolheptane, 2-butyl-2-ethyl-1,3-propanediol, polyoxyethylene glycol (number of added moles: not more than 10), polyoxypropylene glycol (number of added moles: not more than 10), propanediol, 1,3-butanediol, 1,4-butanediol, 1,5-pentanediol 1,6-hexanediol, 1,9-nonanediol, neopentyl glycol, octanediol, butylethylpentanediol, 2-ethyl-1,3-hexanediol, cyclohexanediol, cyclohexanedimethanol, tricyclodecanedimethanol, cyclopentadienedimethanol, and dimer diol; and trifunctional aliphatic or alicyclic alcohols such as glycerol, trimethylolpropane, 1,2,4-butanetriol, and ethylene oxide adducts (number of added moles: not more than 10) or propylene oxide adducts (number of added moles: not more than 10) of these alcohols. Among the various options, polyester acrylates having a structural unit derived from at least one compound selected from the group consisting of ethylene glycol, propylene glycol, glycerol and trimethylolpropane are preferred.

Furthermore, examples of the above hydroxyl group-containing (meth)acrylates include hydroxyl group-containing mono(meth)acrylates such as 2-hydroxyethyl (meth)acrylate, 1-hydroxypropyl (meth)acrylate, 2-hydroxypropyl (meth)acrylate, 3-hydroxypropyl (meth)acrylate, 1-hydroxybutyl (meth)acrylate, 2-hydroxybutyl (meth)acrylate, 3-hydroxybutyl (meth)acrylate, 4-hydroxybutyl (meth)acrylate, 6-hydroxyhexyl (meth)acrylate, 8-hydroxyoctyl (meth)acrylate, cyclohexanedimethanol mono(meth)acrylate, and 10-hydroxydecyl (meth)acrylate,
hydroxyl group-containing di(meth)acrylates such as glycerol di(meth)acrylate, trimethylolpropane di(meth)acrylate, trimethylolethane di(meth)acrylate, and 2-hydroxy-3-acryloyloxyproply (meth)acrylate
hydroxyl group-containing tri(meth)acrylates such as pentaerythritol tri(meth)acrylate,
hydroxyl group-containing penta(meth)acrylates such as dipentaerythritol penta(meth)acrylate, as well as
other hydroxyl group-containing (meth)acrylates such as (meth)acrylates having a terminal hydroxyl group obtained by cyclization addition of an above-mentioned hydroxyl group-containing (meth)acrylate and ε-caprolactone, and alkylene oxide adduct (meth)acrylates obtained by repeated addition of an alkylene oxide such as ethylene oxide, propylene oxide or butylene oxide to an above-mentioned hydroxyl group-containing (meth)acrylate.

Among the various options, hydroxyl group-containing (meth)acrylates having one to three (meth)acrylate groups within the molecule are preferred.

In one embodiment, an oligomer available as a commercial product may be used as the (meth)acrylate compound (A-1). Examples of these commercial products include polyester (meth)acrylates such as EBECRYL 820, 824, 837 and 450 (all of which are polyester acrylates) manufactured by Daicel-Allnex Ltd. Further, examples of urethane (meth)acrylates include EBECRYL 8210 and 8409 (which are both aliphatic urethane acrylates) manufactured by Daicel-Allnex Ltd.

In one embodiment, the (meth)acrylate component (A) contains a (meth)acrylate compound (A-1) having a molecular weight of 500 or greater. The (meth)acrylate compound (A-1) may include one or more compounds selected from the group consisting of the (meth)acrylate monomers, (meth)acrylate oligomers and (meth)acrylate polymers exemplified above. The amount of the (meth)acrylate compound (A-1) preferably represents at least 70% by mass of the total mass of the composition. The amount of the (meth)acrylate compound (A-1) is more preferably at least 75% by mass, and even more preferably 80% by mass or greater.

In one embodiment, the (meth)acrylate compound (A-1) preferably includes a polyfunctional (meth)acrylate monomer. Among the various options, inclusion of a trimethylolpropane alkylene oxide-modified triacrylate compound described below is preferred.

### (Trimethylolpropane Alkylene Oxide-Modified Triacrylate Compound)

In one embodiment, the (meth)acrylate compound (A-1) includes a trimethylolpropane alkylene oxide-modified triacrylate compound. The amount of that compound is preferably at least 50% by mass of the total mass of the composition. In one embodiment, the amount of the trimethylolpropane alkylene oxide-modified triacrylate compound is more preferably at least 60% by mass, and even more preferably 70% by mass or greater. On the other hand, from the viewpoint of the coating film characteristics, this amount is preferably not more than 98% by mass, more preferably not more than 85% by mass, and even more preferably 75% by mass or less.

The trimethylolpropane alkylene oxide-modified triacrylate compound has a structure represented by general formula (I) shown below. In general formula (I), R represents one or more units selected from among alkylene oxide units such as ethylene oxide, propylene oxide, butylene oxide, pentylene oxide and hexylene oxide. Further, 1+m+n represents the average number of added alkylene oxide units. Furthermore, the average number of added alkylene oxide units is preferably within a range from 2 to 20 mol per molecule.

Trimethylolpropane Alkylene Oxide-Modified Triacrylate Compound

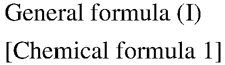

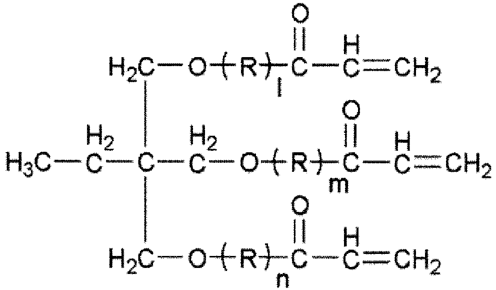

The trimethylolpropane alkylene oxide-modified triacrylate compound can be used to easily modify the coating film characteristics, by appropriate selection of the type of alkylene oxide, and the number of added alkylene oxide units.

For example, by increasing the number of added units, better suppression of migration caused by penetration can be achieved. Moreover, because the compound has three reactive acryloyl groups within the molecule, the curability is more favorable than that of an acrylate monomer having a similar molecular weight.

Further, the viscosity is also lower than an acrylate monomer having a similar molecular weight, meaning any increase in the viscosity of the ink or varnish can be suppressed. Furthermore, by adjusting the amount of the trimethylolpropane alkylene oxide-modified triacrylate compound, a favorable balance can be achieved between the strength of the cured coating film and the level of migration suppression. Among the various possibilities, trimethylolpropane ethylene oxide-modified triacrylates and trimethylolpropane propylene oxide-modified triacrylates are preferred as the trimethylolpropane alkylene oxide-modified triacrylate compound. These compounds can be obtained as commercially available products.

For example, trimethylolpropane ethylene oxide-modified triacrylate compounds that can be obtained as commercially available products include EO (3 mol)-modified trimethylolpropane tri(meth)acrylate, EO (6 mol)-modified trimethylolpropane tri(meth)acrylate, EO (9 mol)-modified trimethylolpropane tri(meth)acrylate, EO (15 mol)-modified trimethylolpropane tri(meth)acrylate, and EO (20 mol)-modified trimethylolpropane tri(meth)acrylate and the like.

For the commercially available products of trimethylolpropane ethylene oxide-modified triacrylate compounds exemplified above, the number of added moles of ethylene oxide is stated specifically by each manufacturer. However, in actuality, there is a distribution for the number of added moles, and these stated numbers merely represent the most common number of added moles. Accordingly, in order to ascertain a more precise number of added moles, a molecular weight distribution measurement by GPC (gel permeation chromatography) or the like is necessary.

On the basis of this type of viewpoint, in the present invention, in those cases where a trimethylolpropane alkylene oxide-modified triacrylate is used as the (meth)acrylate compound, the molecular weight distribution is measured by GPC, and an amount is prescribed for the compound having a molecular weight within a specific range on the graph. For example, on the GPC graph, if the amount of the component for which the molecular weight falls within the range of less than 500 is deemed X%, then when reporting the amount A of the trimethylolpropane alkylene oxide-modified triacrylate, the amount of the trimethylolpropane alkylene oxide-modified triacrylate having a molecular weight of less than 500 is calculated as A × X (%). Oligomers and polymers also have molecular weight distributions, and the molecular weight is generally specified as a weight average molecular weight or a number average molecular weight. However, in the present invention, the amount of a compound is calculated from the fraction of the compound having a molecular weight within a specific range, as determined from the GPC graph in the manner described above.

In one embodiment, in the (meth)acrylate compound (A-1), the amount of the trimethylolpropane alkylene oxide-modified triacrylate compound having a molecular weight of 1,000 or greater is preferably less than 35% by mass of the total mass of the composition, and may be 0% by mass. Trimethylolpropane alkylene oxide-modified triacrylate compounds having a molecular weight of 1,000 or greater exhibit a strong effect in suppressing migration caused by the penetration of unreacted components. However, because the acrylic equivalent weight (molecular weight per acryloyl group) is low, the coating film strength is prone to deterioration. Accordingly, in those cases where the amount of the trimethylolpropane alkylene oxide-modified triacrylate compound having a molecular weight of 1,000 or greater satisfies the above range, the balance between limiting deterioration in the strength of the cured coating film and achieving migration resistance can be controlled more favorably.

In the (meth)acrylate compound (A-1), the amount of the trimethylolpropane alkylene oxide-modified triacrylate compound having a molecular weight of 1,000 or greater is preferably less than 30% by mass of the total mass of the composition. This amount may be more preferably less than 25% by mass, and even more preferably less than 20% by mass.

In one embodiment, the (meth)acrylate compound (A-1) may contain at least one type of oligomer selected from the group consisting of urethane (meth)acrylates, polyester (meth)acrylates and epoxy (meth)acrylates in an amount of at least 50% by mass of the total mass of the composition. When the amount of this oligomer is at least 50% by mass, migration can be more easily suppressed. When an above-mentioned oligomer is used, from the viewpoint of migration suppression, the amount of the oligomer, relative to the total mass of the composition, is preferably at least 55% by mass, more preferably at least 60% by mass, and even more preferably 70% by mass or greater. On the other hand, from the viewpoint of the coating film characteristics, and particularly the gloss and the like, this amount is preferably not more than 98% by mass, more preferably not more than 90% by mass, and even more preferably 80% by mass or less.

In the (meth)acrylate component (A) of the electron beam-curable composition, (meth)acrylate compounds having a molecular weight of less than 500 exhibit favorable curability, and therefore enable the formation of a tough coating film. However, because the molecular weight is low, migration caused by penetration of unreacted components is more likely to occur, and therefore the amount of such compounds is preferably reduced as far as possible. Accordingly, in one embodiment, the amount of (meth)acrylate compounds having a molecular weight of less than 500 is preferably less than 25% by mass of the total mass of the composition.

In one embodiment, in those cases where, as described above, the amount of the component having a molecular weight of less than 500 is less than 25% by mass, migration can be more easily suppressed to a level within the permissible range. The amount of (meth)acrylate compounds having a molecular weight of less than 500 within the (meth)acrylate component (A), relative to the total mass of the composition, is more preferably less than 21% by mass, and even more preferably less than 16% by mass. In one embodiment, this amount may be 0% by mass.

One embodiment relates to an electron beam-curable composition comprising the (meth)acrylate compound (A) (but excluding silicone-modified compounds) and a solid wax (B), wherein the (meth)acrylate compound (A) satisfies conditions (1) to (3) described below.
(1) A trimethylolpropane alkylene oxide-modified triacrylate compound is included in an amount of at least 50% by mass of the total mass of the composition.
(2) Components having a weight average molecular weight of less than 500 are included in an amount of less than 25% by mass of the total mass of the composition.
(3) Trimethylolpropane alkylene oxide-modified triacrylate compounds having a weight average molecular weight of 1,000 or greater are included in an amount of less than 35% by mass of the total mass of the composition.

In the embodiment described above, the (meth)acrylate compound (A) preferably also includes a (meth)acrylate oligomer. Among the various options, a polyester (meth)acrylate can be used particularly favorably. When a polyester (meth)acrylate is used, a tough cured coating film can be more easily obtained. Further, the compatibility with the (meth)acrylate monomer is good, and the viscosity is low, meaning increases in the viscosity of the ink or varnish can be easily suppressed. In one embodiment, the amount of the polyester (meth)acrylate in the electron beam-curable composition, relative to the total mass of the composition, is preferably within a range from 5 to 45% by mass, and more preferably from 10 to 40% by mass.

### (Solid Wax (B))

The electron beam-curable composition of one embodiment of the present invention preferably comprises a solid wax (B). By including the solid wax (B), the coating film characteristics such as the abrasion resistance and slipperiness can be significantly improved. In this description, a "solid wax (B)" means a wax that exists in a solid state at 25°C.

A single type of solid wax (B) may be used alone, or a combination of two or more types may be used.

There are no particular limitations on the solid wax (B), and conventional waxes may be used. Specific examples of natural waxes include paraffin wax, microcrystalline wax, montan wax, carnauba wax, candelilla wax, rice wax and vegetable wax. Further, examples of synthetic waxes include polyethylene wax, polypropylene wax, Fischer-Tropsch wax, polytetrafluoroethylene wax, and amide wax. Among these, polyethylene wax and polytetrafluoroethylene wax are preferred.

In order to realize the effect of using the solid wax, the average particle size of the solid wax is preferably at least as large as the coating film thickness of the ink or varnish. If the average particle size of the solid wax is smaller than the coating film thickness of the ink or varnish, then the effect of the wax tends not to manifest satisfactorily, whereas on the other hand, if the average particle size of the solid wax is much greater than the coating film thickness of the ink or varnish, then the gloss tends to deteriorate markedly.

In one embodiment, from the viewpoints of the abrasion resistance and gloss, the average particle size of the solid wax (B) is preferably within a range from 2 to 8 µm, and more preferably from 3 to 5 µm.

The average particle size is a value obtained using a laser diffraction particle size distribution analyzer SALD-2200 manufactured by Shimadzu Corporation, by measuring the particle size that corresponds with a cumulative value of 50% (volume-based) on the particle size distribution curve.

From the viewpoints of the abrasion resistance and gloss, the amount of the solid wax (B), relative to the total mass of the composition, may be at least 0.1% by mass, and is preferably 0.2% by mass or greater. This amount is preferably not more than 3.0% by mass. In one embodiment, the amount, relative to the total mass of the composition, may be within a range from 0.1 to 3.0% by mass, and is preferably from 0.3 to 2.0% by mass, and more preferably from 0.4 to 1.9% by mass.

### (Leveling Agent (C))

The electron beam-curable composition of one embodiment of the present invention may also comprise a leveling agent (C). In one embodiment, the composition preferably comprises a silicone-based leveling agent.

In one embodiment, from the viewpoint of improving the pinhole properties, the electron beam-curable composition preferably comprises an unreactive silicone-based compound. The amount of the unreactive silicone-based compound, relative to the total mass of the composition, is preferably within a range from 0.1 to 2.0% by mass, and more preferably from 0.2 to 1.9% by mass.

The term "unreactive" describing the unreactive silicone-based compound means the compound does not contain any reactive groups such as a (meth)acryloyl group, allyl group, vinyl group, or vinyl ether group or the like within the structure.

The unreactive silicone-based compound preferably has a polyorganosiloxane skeleton, and compounds having the polydimethylsiloxane structure (II) shown below are particularly preferred. In the formula, n represents an integer of 1 or greater.

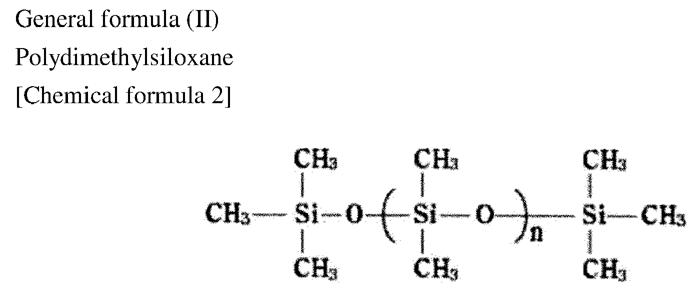

Further, preferred examples of the polydimethylsiloxane described above include amino-modified polydimethylsiloxane resins, polyether-modified polydimethylsiloxane resins, alkyl-modified polydimethylsiloxane resins, aralkyl-modified polydimethylsiloxane resins, epoxy-modified polydimethylsiloxane resins, carboxyl-modified polydimethylsiloxane resins, carbinol-modified polydimethylsiloxane resins, mercapto-modified polydimethylsiloxane resins, phenol-modified polydimethylsiloxane resins, multiple functional group-modified polydimethylsiloxane resins, methylstyryl-modified polydimethylsiloxane resins, higher fatty acid ester-modified polydimethylsiloxane resins, higher alkoxy-modified polydimethylsiloxane resins, higher fatty acid-containing modified polydimethylsiloxane resins, fluorine-modified polydimethylsiloxane resins, and polyether-modified polydimethylsiloxane resins.

A single unreactive silicone-based compound may be used alone, or a combination of two or more such compounds may be used. Among the various possibilities, polyether-modified polydimethylsiloxane resins are preferred from the viewpoint of being able to control the compatibility with the (meth)acrylate compound (A) by adjusting the type and number of added alkylene oxide units within the polyether chain. The alkylene oxide is preferably polyethylene glycol, polypropylene glycol, or a polyethylene glycol-polypropylene glycol copolymer. Commercially available products may also be used as the polyether-modified polydimethylsiloxane resin. For example, TEGO GLIDE 100 manufactured by Evonik Industries AG can be used favorably.

In another embodiment, from the viewpoint of improving the slipperiness of the surface, the electron beam-curable composition preferably comprises a (meth)acrylicmodified silicone-based compound. A (meth)acrylic-modified silicone-based compound means a compound having an polyorganosiloxane skeleton, and containing a (meth)acryloyl group within that structure. The polyorganosiloxane skeleton preferably has the polydimethylsiloxane structure (II) exemplified above. Because the (meth)acrylic-modified silicone-based compound contains a (meth)acryloyl group within the structure, EB irradiation can cause a reaction with the (meth)acrylate compound in the composition. For example, the product TEGO Rad 2300 (a polyether-modified polydimethylsiloxane resin having acrylic groups) manufactured by Evonik Industries AG can be used favorably as the (meth)acrylicmodified silicone-based compound.

In one embodiment, the weight average molecular weight of the (meth)acrylicmodified silicone-based compound may be within a range from 500 to 10,000. In one embodiment, from the viewpoint of compatibility, the molecular weight of the (meth)acrylicmodified silicone-based compound is preferably within a range from 500 to 2,500. Further, from the viewpoint of reactivity, the number of (meth)acryloyl groups per molecule is preferably within a range from 1 to 10. The amount of the (meth)acrylic-modified silicone-based compound, relative to the total mass of the composition, is preferably within a range from 0.1 to 2.0% by mass, and more preferably from 0.2 to 1.9% by mass.

In one embodiment, the electron beam-curable composition may comprise both an unreactive silicone-based compound and a (meth)acrylic-modified silicone-based compound. In this type of embodiment, the amount of each compound may be as outlined above.

### (Polymerization Inhibitor)

The electron beam-curable composition of one embodiment of the present invention may also comprise an added polymerization inhibitor in order to improve the storage stability. Specific examples of the polymerization inhibitor include (alkyl)phenols, hydroquinone, catechol, resorcinol, p-methoxyphenol, t-butylcatechol, t-butylhydroquinone, pyrogallol, 1,1-picrylhydrazyl, phenothiazine, p-benzoquinone, nitrosobenzene, 2,5-di-tert-butyl-p-benzoquinone, dithiobenzoyl disulfide, picric acid, cupferron, aluminum N-nitrosophenylhydroxylamine, tri-p-nitrophenylmethyl, N-(3-oxyanilino-1,3-dimethylbutylidene)aniline oxide, dibutylcresol, cyclohexanone oxime cresol, guajacol, o-isopropylphenol, butyraldoxime, methyl ethyl ketoxime, and cyclohexanone oxime. In those cases where a polymerization inhibitor is used, the amount added may be within a range from 0.01 to 1% by mass of the total mass of the composition.

### (Inert Resin)

The electron beam-curable composition of one embodiment of the present invention may also comprise an inert resin. By including an inert resin, curing shrinkage of the coating film that can occur during curing can be moderated, substrate curling can be suppressed, and the adhesion to the substrate can be improved. In the present invention, the term "inert" means the resin has no reactive groups, and either a single inert resin may be used alone, or a combination of two or more such resins may be used.

Examples of inert resins include polyvinyl chloride, (meth)acrylic resins, styrene-(meth)acrylic resins, epoxy resins, polyester resins, polyurethane resins, cellulose derivatives (such as ethyl cellulose, cellulose acetate and nitrocellulose), vinyl chloride-vinyl acetate copolymers, polyamide resins, polyvinyl acetal resins, diallyl phthalate resins, alkyd resins, rosin-modified alkyd resins, petroleum resins, urea resins, and synthetic rubbers such as butadiene-acrylonitrile copolymers.

### (Other Components)

The electron beam-curable composition according to one embodiment of the present invention may, if necessary, contain one or more conventional additives. Examples of additives that may be used include curing agents, plasticizers, humectants, adhesion assistants, antifoaming agents, antistatic agents, trapping agents, blocking inhibitors, silica particles and preservatives. Furthermore, oils, flame retardants, fillers, stabilizers, reinforcing agents, matting agents, abrasives, organic microparticles, and inorganic microparticles and the like may also be used.

Further, from the viewpoint of carbon neutrality and the like, raw materials derived from biomass that utilizes renewable natural resources such as plants can be used favorably as each of the raw materials used in the electron beam-curable composition of the present invention.

The electron beam-curable composition of one embodiment of the present invention comprises substantially no photopolymerization initiator. Here, the expression "comprises substantially no ~" means that there is no intentional addition to the composition, and the amount of any unintentional addition is less than 1%. Unintentional additions may refer to cases where any of the raw materials may contain trace amounts, or cases where contamination may occur during the composition production process or the printed item production process.

### <Method for Producing Electron Beam-Curable Composition>

The electron beam-curable of the present invention can be produced using a production method in which the (meth)acrylate compound (A), and the solid wax (B), the unreactive silicone-based compound and the (meth)acrylic-modified silicone-based compound which may be used as required, are mixed and stirred for a period of 30 minutes to 3 hours using a Disper or a mixer or the like. Alternatively, the (meth)acrylate compound (A) may first be mixed and stirred, and the solid wax (B), the unreactive silicone-based compound and the (meth)acrylic-modified silicone-based compound then added thereafter.

In one embodiment, the viscosity of the electron beam-curable composition is preferably less than 1,000 mPa·s. When the viscosity is less than 1,000 mPa·s, any deterioration in the leveling properties can be suppressed, and excellent gloss can be achieved as part of the coating film characteristics. The viscosity is preferably less than 700 mPa·s, more preferably less than 500 mPa·s, and even more preferably less than 300 mPa·s. This viscosity refers to a value measured in accordance with JIS Z8803:2011, and is a value measured at 25°C using an E-type viscometer.

### <Printing Method>

There are no particular limitations on the method used for printing the electron beam-curable composition of an embodiment described above, and conventional methods may be used. Specific examples of devices that may be used include a roll coater, rod coater, blade, wire bar, doctor knife, spin coater, screen coater, gravure coater, offset gravure coater, and flexo coater and the like. Further, the composition may also be used in combination with inks that are UV-curable, heat-drying, evaporative drying, oxidative polymerization, liquid toners, or powdered toners or the like, in either an inline printing process or an off-line printing process. The coating film thickness of the composition following electron beam curing is preferably within a range from 2 to 10 µm, and more preferably from 3 to 5 µm. Following formation of the printed layer using a printing method mentioned above, the printed layer is immediately passed through the electron beam irradiation device to form the electron beamcured printed layer. The electron beam irradiation dose is typically within a range from 10 to 60 kGy at an accelerating voltage of 110 kV, and is preferably from 20 to 45 kGy at an accelerating voltage of 110 kV. Following electron beam irradiation, heating may be conducted if necessary to accelerate the curing process.

### <Electron Beam-Curable Overcoat Varnish>

The electron beam-curable composition of an embodiment described above can be used favorably as an electron beam-curable overcoat varnish. An electron beam-curable overcoat varnish is an electron beam-curable composition that is applied to the printed surface or non-printed surface of a substrate and then irradiated with an electron beam to form a cured coating film, for the purpose of imparting the printed surface or non-printed surface of the substrate with the desired surface properties. Electron beam-curable compositions used in overcoat varnish applications often contain no pigments, dyes, or other coloring components. The surface properties required in overcoat varnish applications differ depending on the final intended use of the printed item. For example, a gloss coat varnish is used mainly for surface protection and to impart gloss. Other overcoat varnishes may be used in cases where other properties such as matt properties, slipperiness, non-slip properties, soft-feel properties, heat resistance, solvent resistance, pseudo-adhesiveness, printability, piercing applicability, repellency, releasability, or barrier properties or the like are required.

Examples of the method used for applying the electron beam-curable overcoat varnish include wet methods in which the overcoat varnish is applied immediately before the printed surface has dried, and dry methods in which the overcoat varnish is applied once the printed surface has dried. In one embodiment, the electron beam-curable composition described above can be used favorably as an overcoat varnish for use in the formation of a surface layer on a food packaging material.

### <Food Packaging Material>

One embodiment of the present invention relates to a food packaging material comprises a substrate and a surface layer provided on top of the substrate, wherein the surface layer is a cured layer of the electron beam-curable composition of an embodiment described above.

### (Substrate)

The substrate is preferably a film-like substrate. In one embodiment, examples of the substrate include polyolefin substrates such as polyethylene and polypropylene, polyester substrates such as polyethylene terephthalate and polylactic acid, polycarbonate substrates, polystyrene-based substrates such as polystyrene, AS resins and ABS resins, Nylon substrates, polyamide substrates, polyvinyl chloride substrates, polyvinylidene chloride substrates, cellophane substrates, paper substrates, aluminum substrates, or film-like substrates formed from a composite material of the above materials.

Furthermore, deposition substrates in which an inorganic compound such as silica, alumina or aluminum has been deposited on a polyethylene terephthalate substrate or Nylon substrate may also be used. Moreover, the deposition-treated surface may also be subjected to a coating treatment with a polyvinyl alcohol or the like. The surface of the substrate that is to be printed (the surface that contacts the printed layer) is preferably treated to facilitate adhesion. Specific examples of this adhesion facilitation treatment include a corona discharge treatment, ultraviolet/ozone treatment, plasma treatment, oxygen plasma treatment, or primer treatment. Further, in the case of a polyethylene terephthalate substrate, if satisfactory adhesiveness cannot be achieved, then a surface treatment such as an acrylic coating treatment, polyester treatment or polyvinylidene chloride treatment may also be conducted.

A paper substrate may be used as the substrate. Examples of the paper substrate include normal paper and cardboard, and there are no particular restrictions on the thickness. The thickness of the paper substrate is, for example, within a range from 0.2 mm to 1.0 mm, substrates with a grammage of 20 to 150 g/m² may be used, and the printing surface of the substrate may be treated to improve adhesion. In order to impart design aesthetics to the paper substrate, the paper surface may be subjected to a deposition treatment with a metal such as aluminum. Further, the paper substrate may be subjected to a surface coating treatment with an acrylic resin, urethane resin, polyester resin, polyolefin resin, or other type of resin, and may also be subjected to a surface treatment such as a corona treatment. Specific examples of surface-treated paper substrates include coated papers and art papers.

The substrate described above (the first substrate) may also be used as a part of a laminated structure in which a second substrate is laminated to the surface of the first substrate opposite the printed surface. In such cases, the laminated second substrate may be a film-like substrate similar to those described above. The second substrate may be the same as, or different from, the first substrate. Among the various options, the second substrate is preferably an unstretched polyethylene, unstretched polypropylene, Nylon substrate, aluminum foil substrate, or an aluminum deposited substrate or the like. In these cases, the second substrate is preferably bonded to the first substrate via an adhesive layer.

Examples of the adhesive layer include layers formed from an anchor coating agent, a urethane-based lamination adhesive, or a melted resin or the like. Examples of anchor coating agents (AC agents) include imine-based AC agents, isocyanate-based AC agents, polybutadiene-based AC agents, and titanium-based AC agents, whereas examples of urethane-based lamination adhesives include polyether urethane-based lamination adhesives and polyester-based lamination adhesives. These adhesives include those that contain an organic solvent, and solvent-free adhesives. Further, examples of the melted resins include melted polyethylene and the like.

### (Barrier Properties)

In one embodiment, the second substrate described above may be imparted with barrier properties relative to gases (such as oxygen, water vapor, nitrogen and carbon dioxide gas). Examples of the method used for imparting these barrier properties include methods in which a barrier substrate is introduced as a laminate, and methods in which a barrier layer is formed by coating. Examples of barrier materials that can be introduced include silica, alumina, aluminum, vinylidene chloride-methyl acrylate copolymers, ethylene-vinyl alcohol copolymers, polyvinylidene chloride, polyvinyl alcohol, polyvinyl alcohol-vinyl acetate copolymers, meta-xylylene adipamide, and Nylon-MXD6. Further, co-extruded films using a combination of a barrier material described above and a substrate may also be used. On the other hand, in a different technique from this type of barrier technique, an active packaging technique in which any oxygen that penetrates into the interior of the package is actively removed may also be applied. Examples of active barrier materials that may be used in active packaging include materials produced by blending a resin with a substance that reacts with oxygen such as reduced iron/sodium chloride, sodium sulfite, or ascorbic acid or the like. Further materials prepared by blending a resin with a cobalt salt as an oxidation catalyst, such as Nylon-MXD6/cobalt salt, double bond-based polymer/cobalt salt, cyclohexene side chaincontaining polymer/cobalt salt, may also be used as materials in which this oxidation catalyst causes an oxidation of the resin that absorbs oxygen.

### EXAMPLES

The present invention is described below in further detail using a series of examples, but the present invention is not limited to the following examples. In the present invention, unless specifically stated otherwise, "parts" indicates "parts by mass", and "%" indicates "% by mass".

### (Raw Materials Used)

Details regarding each of the raw materials listed in Tables A1 and A2 were as follows.

### <(Meth)acrylate Compound (A)>

Miramer M300: TMPTA (trimethylolpropane triacrylate), manufactured by MIWON Specialty Chemical Co., Ltd.
Miramer M3130: TMP (EO) 3TA (EO (3 mol)-modified trimethylolpropane triacrylate), manufactured by MIWON Specialty Chemical Co., Ltd.
Miramer M3160: TMP (EO) 6TA (EO (6 mol)-modified trimethylolpropane triacrylate), manufactured by MIWON Specialty Chemical Co., Ltd.
Miramer M3190: TMP (EO) 9TA (EO (9 mol)-modified trimethylolpropane triacrylate), manufactured by MIWON Specialty Chemical Co., Ltd.
Miramer M3150: TMP (EO) 15TA (EO (15 mol)-modified trimethylolpropane triacrylate), manufactured by MIWON Specialty Chemical Co., Ltd.
AT-20E: TMP (EO) 20TA (EO (20 mol)-modified trimethylolpropane triacrylate), manufactured by Shin-Nakamura Chemical Co., Ltd.
EBECRYL 11: PEG600DA (polyethylene glycol 600 diacrylate), manufactured by Daicel-Allnex Ltd.
APG-700: PPG700DA (polypropylene glycol 700 diacrylate), manufactured by Shin-Nakamura Chemical Co., Ltd.
EBECRYL 820: polyester acrylate, manufactured by Daicel-Allnex Ltd.

### <Solid Wax (B)>

SST-1 MG-RC: polytetrafluoroethylene wax, average particle size 1 µm, manufactured by Shamrock Technologies Inc.
Ceraflour 981: polytetrafluoroethylene wax, average particle size 3 µm, manufactured by BYK-Chemie GmbH
Ceraflour 991: polyethylene wax, average particle size 5 µm, manufactured by BYK-Chemie GmbH
Ceraflour 997: polytetrafluoroethylene wax, average particle size 7 µm, manufactured by BYK-Chemie GmbH
Ceraflour 970: polypropylene wax, average particle size 9 µm, manufactured by BYK-Chemie GmbH

### <Leveling Agent (C)>

TEGO GLIDE 100: unreactive silicone-based compound (polyether-modified polydimethylsiloxane resin), manufactured by Evonik Industries AG
TEGO Rad 2300: (meth)acrylic-modified silicone-based compound (polyether-modified polydimethylsiloxane resin having an acrylic group), manufactured by Evonik Industries AG

### <Polymerization Inhibitor>

### Genorad 24: di-t-butyl-7-phenylquinone methide, manufactured by RAHN AG

For each of the raw materials shown in Tables B1 and B2, details regarding those materials not listed above were as follows.

### <(Meth)acrylate Compound (A)>

TPGDA: TPGDA (tripropylene glycol diacrylate), manufactured by Daicel-Allnex
EBECRYL LEO 10501: TMP (EO) 4TA (EO (4 mol)-modified trimethylolpropane triacrylate), manufactured by Daicel-Allnex Ltd.
EBECRYL 824: polyester acrylate, manufactured by Daicel-Allnex Ltd.
EBECRYL 837: polyester acrylate, manufactured by Daicel-Allnex Ltd.
EBECRYL 450: aliphatic urethane acrylate, manufactured by Daicel-Allnex Ltd.
EBECRYL 8210: aliphatic urethane acrylate, manufactured by Daicel-Allnex Ltd.

### (Molecular Weight Distribution)

The molecular weight distribution of each compound used as the (meth)acrylate component (A) in the following examples and comparative examples was measured using a gel permeation chromatograph (HLC-8320) manufactured by Tosoh Corporation. A calibration curve was created using standard polystyrene samples. Tetrahydrofuran was used as the eluent, and three TSKgel Super HM-M columns (manufactured by Tosoh Corporation) were used. The measurements were conducted under conditions including a flow rate of 0.6 ml/minute, an injection volume of 10 µl and a column temperature of 40°C.

Based on the graphs from the gel permeation chromatography (GPC) measurements conducted under the above conditions, the proportion of the surface area was determined for each of molecular weights less than 500, molecular weights of 500 or greater, and molecular weights of 1,000 or greater. Further, the weight average molecular weight was also calculated. These results are shown in Tables A1, A2, B1 and B2 as (I) proportion (%) of molecular weights less than 500, (II) proportion (%) of molecular weights of 500 or greater, and (III) proportion (%) of molecular weights of 1,000 or greater.

### <1> Production of Electron Beam-Curable Compositions

### (Example A1)

First, 43.0 parts of Miramer M3160 manufactured by MIWON Specialty Chemical Co., Ltd. (ethylene oxide-modified trimethylolpropane triacrylate, number of added moles of ethylene oxide listed in catalog: 6), 54.6 parts of Miramer M3190 manufactured by MIWON Specialty Chemical Co., Ltd. (ethylene oxide-modified trimethylolpropane triacrylate, number of added moles of ethylene oxide listed in catalog: 9), 1.0 parts of a polyethylene wax with an average particle size of 5 µm, 0.2 parts of a (meth)acrylic-modified silicone-based compound, 1.0 parts of an unreactive silicone-based compound, and 0.2 parts of a polymerization inhibitor were mixed together and stirred using a butterfly mixer, thus producing an electron beam-curable composition of Example A1.

### (Examples A2 to A34)

With the exceptions of using the materials and amounts shown in Table A1, electron beam-curable compositions of Examples A2 to A34 were produced using the same method as Example A1.

### (Comparative Examples A1 to A6)

With the exceptions of using the materials and amounts shown in Table A2, electron beam-curable compositions of Comparative Examples A1 to A6 were produced using the same method as Example A1.

### (Example B1)

First, 97.6 parts of Miramer M3190 manufactured by MIWON Specialty Chemical Co., Ltd. (ethylene oxide-modified trimethylolpropane triacrylate, number of added moles of ethylene oxide listed in catalog: 9), 1.0 parts of a polyethylene wax (Ceraflour 991, manufactured by BYK-Chemie GmbH, average particle size of 5 µm), 1.0 parts of a (meth)acrylic-modified silicone-based compound (TEGO Rad 2300, manufactured by Evonik Industries AG), 0.2 parts of an unreactive silicone-based compound (TEGO GLIDE 100, manufactured by Evonik Industries AG), and 0.2 parts of a polymerization inhibitor (Genorad 24, manufactured by RAHN AG) were mixed together and stirred using a butterfly mixer, thus producing an electron beam-curable composition of Example B1.

### (Examples B2 to B27)

With the exceptions of using the materials and amounts shown in Table B1, electron beam-curable compositions of Examples B2 to B27 were produced using the same method as Example B1.

### (Comparative Examples B1 to B5)

With the exceptions of using the materials and amounts shown in Table B2, electron beam-curable compositions of Comparative Examples B1 to B5 were produced using the same method as Example B1.

### <2> Evaluation of Electron Beam-Curable Overcoat Varnishes

Using each of the electron beam-curable compositions produced in Examples A1 to A34, Comparative Examples A1 to A6, Examples B1 to B27, and Comparative Examples B1 to B5, printed items were produced and evaluated as electron beam-curable overcoat varnishes.

### <2-1> Method for Producing Printed Items

### (Method for Producing Printed Item (i) of Example A1)

Using the electron beam-curable composition obtained in Example A1, printing was conducted using a flexo printing method to produce a printed item (i). A Flexiproof 100 manufactured by RK Print Coat Instruments Ltd. was used as the printer, the printing conditions included a print speed of 70 m/min, an anilox roller line count of 100 to 500 lines/inch, an anilox roller cell volume of 8 to 20 cm³/m², a hexagonal anilox roller engraved pattern, and a Flexcel NXH digital flexo plate manufactured by the Eastman Kodak Company as the plate, and using a white polyethylene film (thickness: 50 µm) as the substrate, printing was conducted so as to achieve a cured coating film thickness of 4 to 5 µm. Immediately following printing, the printed coating film was cured using an electron beam irradiation device EC250/15/180L manufactured by Iwasaki Electric Co., Ltd., under conditions including an accelerating voltage of 110 kV and an electron beam irradiation dose of 30 kGy.

### (Method for Producing Printed Items (i) of Examples A2 to A34)

Using the same method as that described for the printed item of Example A1, each of the electron beam-curable compositions obtained in Examples A2 to A34 was used to produce a printed item (i).

### (Method for Producing Printed Items (i) of Comparative Examples A1 to A6)

Using the same method as that described for the printed item of Example A1, each of the electron beam-curable compositions obtained in Comparative Examples A1 to A6 was used to produce a printed item (i).

### (Method for Producing Printed Items (i) of Examples B1 to B27 and Comparative Examples B1 to B5)

Using the same method as that described for the printed item of Example A1, each of the electron beam-curable compositions obtained in Examples B1 to B27 and Comparative Examples B1 to B5 was used to produce a printed item.

### (Method for Producing Printed Items (ii) of Examples B1 to B27 and Comparative Examples B1 to B5)

In the production method for the printed item of Example A1, with the exception of replacing the white polyethylene film (thickness: 50 µm) used as the substrate with a product "FOR" (biaxially stretched polypropylene film (OPP film), thickness: 30 µm) manufactured by Futamura Chemical Co., Ltd., the same method as that described for Example A1 was used to produce printed items (ii) using each of the electron beam-curable compositions obtained in Examples B1 to B27 and Comparative Examples B1 to B5.

### <2-2> Evaluations

Using the printed items obtained above, various evaluations were conducted in accordance with the methods described below. The evaluation results are shown in Tables A1, A2, B1 and B2.

### (Evaluation of Migration Resistance)

Using each of the printed items (i) produced using the electron beam-curable compositions of the Examples B1 to B27and Comparative Examples B1 to B5, a migration resistance (1) evaluation was conducted in accordance with the method described below. Further, for the printed items (ii) produced using the electron beam-curable compositions of Examples B1 to B27 and the Comparative Examples B1 to B5, a migration resistance (2) evaluation was conducted in accordance with the method described below.

First, the printed item was used to prepare three samples that had been cut to dimensions of 10 cm × 10 cm, the three samples were superimposed so that the printed surfaces contacted the non-printed surfaces, and the samples were then held under an applied load of 2.0 kg/cm² for 10 days in an atmosphere of 25°C and 50% humidity. Subsequently, the middle printed item of the three samples was removed and set in a migration cell so that a surface area of 0.5 dm² of the non-printed surface made contact with 50 ml of 95% ethanol.

Subsequently, under constant stirring, residual monomers were extracted at 60°C over a 10-day period. The migration cell was completely sealed with a tool, so that during the above process, any loss of the contents or any contamination of the contents (extract) with other components was able to be completely suppressed.

Using an LC-MS (high-speed liquid chromatograph mass spectrometer) manufactured by Waters Corporation, the above extract was analyzed. The migration resistance of the (meth)acrylate compound (A) that existed within the ethanol was evaluated based on the detected concentration against the evaluation criteria listed below. Evaluations of 3 to 5 were deemed to represent the industrially applicable range.

### (Evaluation Criteria)

5: less than 10 ppb
4: at least 10 ppb but less than 25 ppb
3: at least 25 ppb but less than 50 ppb
2: at least 50 ppb but less than 100 ppb
1: 100 ppb or greater

### (Evaluation of Pinhole Properties)

An evaluation of the pinhole properties was conducted for each of the printed items (i) produced using the electron beam-curable compositions of the examples and comparative examples. The evaluation was conducted by confirming the number of pinholes (small craterlike holes in the ink coating film) that existed within a surface area of 1 cm² by inspection under an electron microscope, and then assigning an evaluation against the following criteria. Evaluations of 3 to 5 were deemed to represent the industrially applicable range.

### (Evaluation Criteria)

5: average number of pinholes of 4 or fewer
4: average number of pinholes of at least 5 but not more than 9
3: average number of pinholes of at least 10 but not more than 14
2: average number of pinholes of at least 15 but not more than 19
1: average number of pinholes of 20 or more

### (Evaluation of Gloss)

For each of the printed items (i) produced using the electron beam-curable compositions of the examples and comparative examples, a gloss meter GM-26D manufactured by Murakami Color Research Laboratory Co., Ltd. was used to measure the gloss value at a reflection angle of 60° relative to the printed item (as prescribed in JIS Z 8741). Based on this measured gloss value, the gloss of the printed item was evaluated against the following criteria. Evaluations of 3 to 5 were deemed to represent the industrially applicable range.

### (Evaluation Criteria)

5: gloss value of 90 or greater
4: gloss value of at least 85 but less than 90
3: gloss value of at least 80 but less than 85
2: gloss value of at least 75 but less than 80
1: gloss value of less than 75

### (Evaluation of Adhesion)

An adhesion evaluation was conducted using each of the printed items (i) produced using the electron beam-curable compositions of the examples and comparative examples. Measurement was conducted using an adhesive tape (cellophane tape (width: 12 mm) manufactured by Nichiban Co., Ltd.), by adhering the tape to the printed surface, and then evaluating the surface area % of the coating film retained on the printed item when the tape was peeled rapidly from the surface at an angle of 180°. Evaluations of 3 to 5 were deemed to represent the industrially applicable range.

### (Evaluation Criteria)

5: 90% or greater
4: at least 70% but less than 90%
3: at least 50% but less than 70%
2: at least 25% but less than 50%
1: less than 25%

### (Abrasion Resistance)

Using each of the printed items (i) produced using the electron beam-curable compositions of the examples and comparative examples, an abrasion resistance test was conducted using a Gakushin-type rubbing fastness tester (load: 500 g, 200 repetitions, opposing paper: high-quality paper) manufactured by Tester Sangyo Co., Ltd., and the amount of scratches on the cured coating film surface was evaluated. Evaluations of 3 to 5 were deemed to represent the industrially applicable range.

### (Evaluation Criteria)

5: no scratches
4: scratched surface area of less than 10%
3: scratched surface area of at least 10% but less than 30%
2: scratched surface area of at least 30% but less than 50%
1: scratched surface area of at 50% or greater

### (Solvent Resistance (1))

The surface of each of the printed items (i) produced using the electron beam-curable compositions obtained in the examples and comparative examples was rubbed with a cotton swab that had been dipped in a 99.5% ethanol solution at a rate of one back and forth repetition per second, and the number of back and forth repetitions required to erode the cured coating film surface was evaluated. Evaluations of 3 to 5 were deemed to represent the industrially applicable range.

### (Evaluation Criteria)

5: at least 200 repetitions
4: at least 150 repetitions but fewer than 200 repetitions
3: at least 100 repetitions but fewer than 150 repetitions
2: at least 50 repetitions but fewer than 100 repetitions
1: fewer than 50 repetitions

### (Solvent Resistance (2))

The surface of each of the printed items (i) produced using the electron beam-curable compositions obtained in the examples and comparative examples was rubbed with a cotton swab that had been dipped in a methyl ethyl ketone solution at a rate of one back and forth repetition per second, and the number of back and forth repetitions required to erode the cured coating film surface was evaluated. Evaluations of 3 to 5 were deemed to represent the industrially applicable range.

### (Evaluation Criteria)

5: at least 200 repetitions
4: at least 150 repetitions but fewer than 200 repetitions
3: at least 100 repetitions but fewer than 150 repetitions
2: at least 50 repetitions but fewer than 100 repetitions
1: fewer than 50 repetitions

**[Table A1] Table A1**

| | | Weight average molecular weight | Molecular weight distribution (%) | | | Example A | | | | | | | | | | | |
|---|---|---|---|---|---|---|---|---|---|---|---|---|---|---|---|---|---|
| | | | (I) less than 500 | (II) at least 500 | (III) at least 1,000 | 1 | 2 | 3 | 4 | 5 | 6 | 7 | 8 | 9 | 10 | 11 | 12 |
| (A) | Miramer M300 (TMPTA) | 336 | 83.1 | 16.9 | 2.4 | | | | | | | | | | | | |
| | Miramer M3130 (TMP(EO)3TA) | 449 | 75.9 | 24.1 | 3.9 | | | | | | | | | | | | |
| | Miramer M3160 (TMP(EO)6TA) | 637 | 37.6 | 62.4 | 10.7 | 43.0 | 22.6 | | | | | | | | | | |
| | Miramer M3190 (TMP(EO)9TA) | 823 | 15.4 | 84.6 | 20.4 | 54.6 | 75.0 | 97.6 | 78.8 | 60.0 | 51.0 | 51.0 | 92.6 | 85.6 | 72.6 | 59.6 | 52.6 |
| | Miramer M3150 (TMP(EO)15TA) | 1254 | 3.9 | 96.1 | 59.6 | | | | 18.8 | 37.6 | | | | | | | |
| | AT-20E (TMP(EO)20TA) | 1442 | 2.1 | 97.9 | 85.1 | | | | | | | | | | | | |
| | EBECRYL 11 (PEG600DA) | 826 | 25.5 | 74.5 | 17.4 | | | | | | 46.6 | | | | | | |
| | APG-700 (PPG700DA) | 1009 | 5.7 | 94.3 | 46.9 | | | | | | | 46.6 | | | | | |
| | EBECRYL 820 (polyester acrylate) | 2347 | 21.4 | 78.6 | | | | | | | | | 5.0 | 12.0 | 25.0 | 38.0 | 45.0 |
| (B) | SST-1 MG-RC (average particle size: 1µm) | | | | | | | | | | | | | | | | |
| | Ceraflour 981 (average particle size: 3 µm) | | | | | | | | | | | | | | | | |
| | Ceraflour 991 (average particle size: 5 µm) | | | | | 1.0 | 1.0 | 1.0 | 1.0 | 1.0 | 1.0 | 1.0 | 1.0 | 1.0 | 1.0 | 1.0 | 1.0 |
| | Ceraflour 997 (average particle size: 7 µm) | | | | | | | | | | | | | | | | |
| | Ceraflour 970 (average particle size: 9 µm) | | | | | | | | | | | | | | | | |
| (C) | TEGO Rad 2300 ((meth)acrylic-modified silicone-based compound) | | | | | 0.2 | 0.2 | 0.2 | 0.2 | 0.2 | 0.2 | 0.2 | 0.2 | 0.2 | 0.2 | 0.2 | 0.2 |
| | TEGO GLIDE 100 (unreactive silicone-based compound) | | | | | 1.0 | 1.0 | 1.0 | 1.0 | 1.0 | 1.0 | 1.0 | 1.0 | 1.0 | 1.0 | 1.0 | 1.0 |
| Genorad 24 (polymerization inhibitor) | | | | | | 0.2 | 0.2 | 0.2 | 0.2 | 0.2 | 0.2 | 0.2 | 0.2 | 0.2 | 0.2 | 0.2 | 0.2 |
| Total | | | | | | 100 | 100 | 100 | 100 | 100 | 100 | 100 | 100 | 100 | 100 | 100 | 100 |
| Amount of (meth)acrylate compound with molecular weight of 500 or more (% of total mass of composition) | | | | | | 73.0 | 77.6 | 82.6 | 84.7 | 86.9 | 77.9 | 87.1 | 82.3 | 81.8 | 81.1 | 80.3 | 79.9 |
| Amount of (meth)acrylate compound with molecular weight of less than 500 (% of total mass of composition) | | | | | | 24.6 | 20.0 | 15.0 | 12.9 | 10.7 | 19.7 | 10.5 | 15.3 | 15.8 | 16.5 | 17.3 | 17.7 |
| Amount of TMP alkylene oxide-modified triacrylate with molecular weight of 1,000 or more (% of total mass of composition) | | | | | | 15.7 | 17.7 | 19.9 | 27.3 | 34.7 | 10.4 | 10.4 | 18.9 | 17.5 | 14.8 | 12.2 | 10.7 |
| Amount of TMP alkylene oxide-modified triacrylate (% of total mass of composition) | | | | | | 97.6 | 97.6 | 97.6 | 97.6 | 97.6 | 51.0 | 51.0 | 92.6 | 85.6 | 72.6 | 59.6 | 52.6 |
| Evaluation results | | Migration resistance (I) | | | | 3 | 4 | 5 | 5 | 5 | 5 | 5 | 5 | 5 | 5 | 5 | 5 |
| | | Pinholes | | | | 3 | 3 | 3 | 3 | 3 | 3 | 4 | 3 | 4 | 5 | 5 | 5 |
| | | Gloss | | | | 4 | 4 | 4 | 4 | 4 | 4 | 4 | 4 | 4 | 4 | 4 | 4 |
| | | Adhesion (cellophane tape peeling) | | | | 4 | 4 | 4 | 3 | 3 | 4 | 4 | 4 | 4 | 5 | 5 | 5 |
| | | Abrasion resistance (surface strength) | | | | 5 | 5 | 4 | 4 | 4 | 4 | 3 | 4 | 4 | 4 | 4 | 4 |
| | | Solvent resistance (1) | | | | 5 | 5 | 5 | 4 | 3 | 3 | 3 | 5 | 5 | 5 | 4 | 3 |

**[Table A1-1] Table A1 (continued)**

| | | Weight average molecular weight | Molecular weight distribution (%) | | | Example A | | | | | | | | | | | | |
|---|---|---|---|---|---|---|---|---|---|---|---|---|---|---|---|---|---|---|
| | | | (I) less than 500 | (II) at least 500 | (III) at least 1,000 | 13 | 14 | 15 | 16 | 17 | 18 | 19 | 20 | 21 | 22 | 23 | 24 | 25 |
| (A) | Miramer M300 (TMPTA) | 336 | 83.1 | 16.9 | 2.4 | | | | | | | | | | | | | |
| | Miramer M3130 (TMP(EO)3TA) | 449 | 75.9 | 24.1 | 3.9 | | | | | | | | | | | | | |
| | Miramer M3160 (TMP(EO)6TA) | 637 | 37.6 | 62.4 | 10.7 | | | | | | | | | | | | | |
| | Miramer M3190 (TMP(EO)9TA) | 823 | 15.4 | 84.6 | 20.4 | 73.6 | 73.5 | 73.3 | 71.8 | 70.6 | 72.6 | 72.6 | 72.6 | 72.6 | 73.5 | 73.2 | 71.7 | 70.6 |
| | Miramer M3150 (TMP(EO)15TA) | 1254 | 3.9 | 96.1 | 59.6 | | | | | | | | | | | | | |
| | AT-20E (TMP(EO)20TA) | 1442 | 2.1 | 97.9 | 85.1 | | | | | | | | | | | | | |
| | EBECRYL 11 (PEG600DA) | 826 | 25.5 | 74.5 | 17.4 | | | | | | | | | | | | | |
| | APG-700 (PPG700DA) | 1009 | 5.7 | 94.3 | 46.9 | | | | | | | | | | | | | |
| | EBECRYL 820 (polyester acrylate) | 2347 | 21.4 | 78.6 | | 25.0 | 25.0 | 25.0 | 25.0 | 25.0 | 25.0 | 25.0 | 25.0 | 25.0 | 25.0 | 25.0 | 25.0 | 25.0 |
| (B) | SST-1 MG-RC (average particle size: 1µm) | | | | | | | | | | 1.0 | | | | | | | |
| | Ceraflour 981 (average particle size: 3 µm) | | | | | | | | | | | 1.0 | | | | | | |
| | Ceraflour 991 (average particle size: 5 µm) | | | | | 1.0 | 1.0 | 1.0 | 1.0 | 1.0 | | | | | 0.1 | 0.4 | 1.9 | 3.0 |
| | Ceraflour 997 (average particle size: 7 µm) | | | | | | | | | | | | 1.0 | | | | | |
| | Ceraflour 970 (average particle size: 9 µm) | | | | | | | | | | | | | 1.0 | | | | |
| (C) | TEGO Rad 2300 ((meth)acrylic-modified silicone-based compound) | | | | | 0.2 | 0.2 | 0.2 | 0.2 | 0.2 | 0.2 | 0.2 | 0.2 | 0.2 | 0.2 | 0.2 | 0.2 | 0.2 |
| | TEGO GLIDE 100 (unreactive silicone-based compound) | | | | | 0.0 | 0.1 | 0.3 | 1.8 | 3.0 | 1.0 | 1.0 | 1.0 | 1.0 | 1.0 | 1.0 | 1.0 | 1.0 |
| Genorad 24 (polymerization inhibitor) | | | | | | 0.2 | 0.2 | 0.2 | 0.2 | 0.2 | 0.2 | 0.2 | 0.2 | 0.2 | 0.2 | 0.2 | 0.2 | 0.2 |
| Total | | | | | | 100 | 100 | 100 | 100 | 100 | 100 | 100 | 100 | 100 | 100 | 100 | 100 | 100 |
| Amount of (meth)acrylate compound with molecular weight of 500 or more (% of total mass of composition) | | | | | | 81.9 | 81.8 | 81.7 | 80.4 | 79.4 | 81.1 | 81.1 | 81.1 | 81.1 | 81.8 | 81.6 | 80.3 | 79.4 |
| Amount of (meth)acrylate compound with molecular weight of less than 500 (% of total mass of composition) | | | | | | 16.7 | 16.7 | 16.6 | 16.4 | 16.2 | 16.5 | 16.5 | 16.5 | 16.5 | 16.7 | 16.6 | 16.4 | 16.2 |
| Amount of TMP alkylene oxide-modified triacrylate with molecular weight of 1,000 or more (% of total mass of composition) | | | | | | 15.0 | 15.0 | 15.0 | 14.7 | 14.4 | 14.8 | 14.8 | 14.8 | 14.8 | 15.0 | 14.9 | 14.6 | 14.4 |
| Amount of TMP alkylene oxide-modified triacrylate (% of total mass of composition) | | | | | | 73.6 | 73.5 | 73.3 | 71.8 | 70.6 | 72.6 | 72.6 | 72.6 | 72.6 | 73.5 | 73.2 | 71.7 | 70.6 |
| Evaluation results | | Migration resistance (I) | | | | 5 | 5 | 5 | 5 | 5 | 5 | 5 | 5 | 5 | 5 | 5 | 5 | 5 |
| | | Pinholes | | | | 3 | 4 | 4 | 5 | 5 | 5 | 5 | 4 | 3 | 5 | 5 | 4 | 3 |
| | | Gloss | | | | 4 | 4 | 4 | 4 | 4 | 4 | 4 | 4 | 3 | 4 | 4 | 4 | 3 |
| | | Adhesion (cellophane tape peeling) | | | | 5 | 5 | 5 | 5 | 5 | 5 | 5 | 5 | 5 | 5 | 5 | 5 | 5 |
| | | Abrasion resistance (surface strength) | | | | 4 | 4 | 4 | 4 | 3 | 3 | 3 | 4 | 5 | 3 | 3 | 4 | 5 |
| | | Solvent resistance (1) | | | | 5 | 5 | 5 | 4 | 3 | 5 | 5 | 5 | 5 | 5 | 5 | 5 | 5 |

**[Table A1-2] Table A1 (continued 2)**

| | | Weight average molecular weight | Molecular weight distribution (%) | | | Example A | | | | | | | | |
|---|---|---|---|---|---|---|---|---|---|---|---|---|---|---|
| | | | (I) less than 500 | (II) at least 500 | (III) at least 1,000 | 26 | 27 | 28 | 29 | 30 | 31 | 32 | 33 | 34 |
| (A) | Miramer M300 (TMPTA) | 336 | 83.1 | 16.9 | 2.4 | | | | | | | | | |
| | Miramer M3130 (TMP(EO)3TA) | 449 | 75.9 | 24.1 | 3.9 | | | | | | | | | |
| | Miramer M3160 (TMP(EO)6TA) | 637 | 37.6 | 62.4 | 10.7 | | | | | | | | | |
| | Miramer M3190 (TMP(EO)9TA) | 823 | 15.4 | 84.6 | 20.4 | 72.8 | 73.6 | | 55.0 | 45.0 | 25.0 | 45.0 | 25.0 | |
| | Miramer M3150 (TMP(EO)15TA) | 1254 | 3.9 | 96.1 | 59.6 | | | 97.6 | 42.6 | | | | | |
| | AT-20E (TMP(EO)20TA) | 1442 | 2.1 | 97.9 | 85.1 | | | | | | | | | 48.0 |
| | EBECRYL 11 (PEG600DA) | 826 | 25.5 | 74.5 | 17.4 | | | | | 52.6 | 72.6 | | | |
| | APG-700 (PPG700DA) | 1009 | 5.7 | 94.3 | 46.9 | | | | | | | 52.6 | 72.6 | 49.6 |
| | EBECRYL 820 (polyester acrylate) | 2347 | 21.4 | 78.6 | | 25.0 | 25.0 | | | | | | | |
| (B) | SST-1 MG-RC (average particle size: 1µm) | | | | | | | | | | | | | |
| | Ceraflour 981 (average particle size: 3 µm) | | | | | | | | | | | | | |
| | Ceraflour 991 (average particle size: 5 µm) | | | | | 1.0 | | 1.0 | 1.0 | 1.0 | 1.0 | 1.0 | 1.0 | 1.0 |
| | Ceraflour 997 (average particle size: 7 µm) | | | | | | | | | | | | | |
| | Ceraflour 970 (average particle size: 9 µm) | | | | | | | | | | | | | |
| (C) | TEGO Rad 2300 ((meth)acrylic-modified silicone-based compound) | | | | | 0.0 | 0.2 | 0.2 | 0.2 | 0.2 | 0.2 | 0.2 | 0.2 | 0.2 |
| | TEGO GLIDE 100 (unreactive silicone-based compound) | | | | | 1.0 | 1.0 | 1.0 | 1.0 | 1.0 | 1.0 | 1.0 | 1.0 | 1.0 |
| Genorad 24 (polymerization inhibitor) | | | | | | 0.2 | 0.2 | 0.2 | 0.2 | 0.2 | 0.2 | 0.2 | 0.2 | 0.2 |
| Total | | | | | | 100 | 100 | 100 | 100 | 100 | 100 | 100 | 100 | 100 |
| Amount of (meth)acrylate compound with molecular weight of 500 or more (% of total mass of composition) | | | | | | 81.2 | 81.9 | 93.8 | 87.5 | 77.3 | 75.2 | 87.7 | 89.6 | 93.8 |
| Amount of (meth)acrylate compound with molecular weight of less than 500 (% of total mass of composition) | | | | | | 16.6 | 16.7 | 3.8 | 10.1 | 20.4 | 22.4 | 9.9 | 8.0 | 3.8 |
| Amount of TMP alkylene oxide-modified triacrylate with molecular weight of 1,000 or more (% of total mass of composition) | | | | | | 14.9 | 15.0 | 58.2 | 36.6 | 9.2 | 5.1 | 9.2 | 5.1 | 40.8 |
| Amount of TMP alkylene oxide-modified triacrylate (% of total mass of composition) | | | | | | 72.8 | 73.6 | 97.6 | 97.6 | 45.0 | 25.0 | 45.0 | 25.0 | 48.0 |
| Evaluation results | | Migration resistance (I) | | | | 5 | 5 | 5 | 5 | 5 | 4 | 5 | 5 | 5 |
| | | Pinholes | | | | 5 | 4 | 2 | 3 | 3 | 2 | 4 | 4 | 4 |
| | | Gloss | | | | 4 | 5 | 3 | 4 | 4 | 3 | 4 | 4 | 4 |
| | | Adhesion (cellophane tape peeling) | | | | 3 | 5 | 2 | 3 | 4 | 5 | 4 | 5 | 4 |
| | | Abrasion resistance (surface strength) | | | | 3 | 1 | 2 | 3 | 3 | 2 | 2 | 1 | 1 |
| | | Solvent resistance (1) | | | | 5 | 4 | 1 | 2 | 2 | 2 | 2 | 2 | 1 |

**[Table A2] Table A2**

| | | Weight average molecular weight | Molecular weight distribution (%) | | | Comparative Example A | | | | | |
|---|---|---|---|---|---|---|---|---|---|---|---|
| | | | (I) less than 500 | (II) at least 500 | (III) at least 1,000 | 1 | 2 | 3 | 4 | 5 | 6 |
| (A) | Miramer M300 (TMPTA) | 336 | 83.1 | 16.9 | 2.4 | 97.6 | | | | 32.6 | 49.6 |
| | Miramer M3130 (TMP(EO)3TA) | 449 | 75.9 | 24.1 | 3.9 | | 97.6 | 40.0 | | | |
| | Miramer M3160 (TMP(EO)6TA) | 637 | 37.6 | 62.4 | 10.7 | | | 57.6 | 57.6 | | |
| | Miramer M3190 (TMP(EO)9TA) | 823 | 15.4 | 84.6 | 20.4 | | | | 40.0 | | |
| | Miramer M3150 (TMP(EO)15TA) | 1254 | 3.9 | 96.1 | 59.6 | | | | | | |
| | AT-20E (TMP(EO)20TA) | 1442 | 2.1 | 97.9 | 85.1 | | | | | 65.0 | 48.0 |
| | EBECRYL 11 (PEG600DA) | 826 | 25.5 | 74.5 | 17.4 | | | | | | |
| | APG-700 (PPG700DA) | 1009 | 5.7 | 94.3 | 46.9 | | | | | | |
| | EBECRYL 820 (polyester acrylate) | 2347 | 21.4 | 78.6 | | | | | | | |
| (B) | SST-1 MG-RC (average particle size: 1µm) | | | | | | | | | | |
| | Ceraflour 981 (average particle size: 3 µm) | | | | | | | | | | |
| | Ceraflour 991 (average particle size: 5 µm) | | | | | 1.0 | 1.0 | 1.0 | 1.0 | 1.0 | 1.0 |
| | Ceraflour 997 (average particle size: 7 µm) | | | | | | | | | | |
| | Ceraflour 970 (average particle size: 9 µm) | | | | | | | | | | |
| (C) | TEGO Rad 2300 ((meth)acrylic-modified silicone-based compound) | | | | | 0.2 | 0.2 | 0.2 | 0.2 | 0.2 | 0.2 |
| | TEGO GLIDE 100 (unreactive silicone-based compound) | | | | | 1.0 | 1.0 | 1.0 | 1.0 | 1.0 | 1.0 |
| Genorad 24 (polymerization inhibitor) | | | | | | 0.2 | 0.2 | 0.2 | 0.2 | 0.2 | 0.2 |
| Total | | | | | | 100 | 100 | 100 | 100 | 100 | 100 |
| Amount of (meth)acrylate compound with molecular weight of 500 or more (% of total mass of composition) | | | | | | 16.5 | 23.5 | 45.6 | 69.8 | 69.2 | 55.4 |
| Amount of (meth)acrylate compound with molecular weight of less than 500 (% of total mass of composition) | | | | | | 81.1 | 74.1 | 52.0 | 27.8 | 28.4 | 42.2 |
| Amount of TMP alkylene oxide-modified triacrylate with molecular weight of 1,000 or more (% of total mass of composition) | | | | | | 0.0 | 3.8 | 7.7 | 14.3 | 55.3 | 40.8 |
| Amount of TMP alkylene oxide-modified triacrylate (% of total mass of composition) | | | | | | 0.0 | 97.6 | 97.6 | 97.6 | 65.0 | 48.0 |
| Evaluation results | | Migration resistance (I) | | | | 1 | 1 | 1 | 2 | 2 | 1 |
| | | Pinholes | | | | 3 | 3 | 3 | 3 | 3 | 3 |
| | | Gloss | | | | 4 | 4 | 4 | 4 | 4 | 4 |
| | | Adhesion (cellophane tape peeling) | | | | 5 | 4 | 4 | 4 | 3 | 4 |
| | | Abrasion resistance (surface strength) | | | | 5 | 5 | 5 | 5 | 2 | 2 |
| | | Solvent resistance (1) | | | | 5 | 5 | 5 | 4 | 2 | 2 |

**Table B1] Table B1**

| | | Weight average molecular weight | Molecular weight distribution (%) | | | Example B | | | | | | | | | | | | |
|---|---|---|---|---|---|---|---|---|---|---|---|---|---|---|---|---|---|---|
| | | | (I) less than 500 | (II) at least 500 | (III) at least 1,000 | 1 | 2 | 3 | 4 | 5 | 6 | 7 | 8 | 9 | 10 | 11 | 12 | 13 |
| | Miramer M3190 (TMP(EO)9TA) | 823 | 15.4 | 84.6 | 20.4 | 97.6 | 70.0 | 65.0 | | | 77.6 | 52.6 | 42.6 | 42.6 | 22.6 | 32.6 | 23.6 | 23.5 |
| | Miramer M3150 (TMP(EO)15TA) | 1254 | 3.9 | 96.1 | 59.6 | | 27.6 | | 97.6 | | | | | | | | | |
| | AT-20E (TMP(EO)20TA) | 1442 | 2.1 | 97.9 | 85.1 | | | 32.6 | | 97.6 | | | | | | | | |
| | EBECRYL 824 (polyester acrylate) | 692 | 42.1 | 57.9 | 18.9 | | | | | | | | | | | | | |
| (A) | EBECRYL 837 (polyester acrylate) | 1584 | 27.8 | 72.2 | 43.8 | | | | | | | | | | | | | |
| | EBECRYL 820 (polyester acrylate) | 2347 | 21.4 | 78.6 | 55.5 | | | | | | 20.0 | 45.0 | 55.0 | | 75.0 | | 75.0 | 75.0 |
| | EBECRYL 450 (polyester acrylate) | 2737 | 28.1 | 71.9 | 62.5 | | | | | | | | | | | | | |
| | EBECRYL 8210 (aliphatic urethane acrylate) | 733 | 57.4 | 42.6 | 24.8 | | | | | | | | | | | | | |
| | EBECRYL 8409 (aliphatic urethane acrylate) | 1455 | 7.6 | 92.4 | 68.0 | | | | | | | | | 55.0 | | 65.0 | | |
| (B) | SST-1 MG-RC (average particle size: 1µm) | | | | | | | | | | | | | | | | | |
| | Ceraflour 981 (average particle size: 3 µm) | | | | | | | | | | | | | | | | | |
| | Ceraflour 991 (average particle size: 5 µm) | | | | | 1.0 | 1.0 | 1.0 | 1.0 | 1.0 | 1.0 | 1.0 | 1.0 | 1.0 | 1.0 | 1.0 | 1.0 | 1.0 |
| | Ceraflour 997 (average particle size: 7 µm) | | | | | | | | | | | | | | | | | |
| | Ceraflour 970 (average particle size: 9 µm) | | | | | | | | | | | | | | | | | |
| (C) | TEGO Rad 2300 ((meth)acrylic-modified silicone-based compound) | | | | | 1.0 | 1.0 | 1.0 | 1.0 | 1.0 | 1.0 | 1.0 | 1.0 | 1.0 | 1.0 | 1.0 | 0.0 | 0.1 |
| | TEGO GLIDE 100 (unreactive silicone-based compound) | | | | | 0.2 | 0.2 | 0.2 | 0.2 | 0.2 | 0.2 | 0.2 | 0.2 | 0.2 | 0.2 | 0.2 | 0.2 | 0.2 |
| Genorad 24 (polymerization inhibitor) | | | | | | 0.2 | 0.2 | 0.2 | 0.2 | 0.2 | 0.2 | 0.2 | 0.2 | 0.2 | 0.2 | 0.2 | 0.2 | 0.2 |
| Total | | | | | | 100.0 | 100.0 | 100.0 | 100.0 | 100.0 | 100.0 | 100.0 | 100.0 | 100.0 | 100.0 | 100.0 | 100.0 | 100.0 |
| Amount ot (meth)acrylate compound with molecular weight ot 500 or more (% of total mass of composition) | | | | | | 82.6 | 85.7 | 86.9 | 93.8 | 95.6 | 81.4 | 79.9 | 79.3 | 86.9 | 78.1 | 87.6 | 78.9 | 78.8 |
| Amount ot (meth)acrylate compound with molecular weight ot less than 500 (% of total mass of composition) | | | | | | 15.0 | 11.9 | 10.7 | 3.8 | 2.0 | 16.2 | 17.7 | 18.3 | 10.7 | 19.5 | 10.0 | 19.7 | 19.7 |
| Amount of TMP alkylene oxide-modified tri(meth)acrylate (% of total mass of composition) | | | | | | 97.6 | 97.6 | 97.6 | 97.6 | 97.6 | 77.6 | 52.6 | 42.6 | 42.6 | 22.6 | 32.6 | 23.6 | 23.5 |
| Amount ot TMP alkylene oxide-modified tri(meth)acrylate with molecular weight of 1,000 or more (% of total mass of composition) | | | | | | 19.9 | 30.7 | 41.0 | 58.2 | 83.1 | 15.8 | 10.7 | 8.7 | 8.7 | 4.6 | 6.7 | 4.8 | 4.8 |
| Amount of urethane (meth)acrylate, polyester (meth)acrylate, and epoxy (meth)acrylate (% of total mass of composition) | | | | | | 0.0 | 0.0 | 0.0 | 0.0 | 0.0 | 20.0 | 45.0 | 55.0 | 55.0 | 75.0 | 65.0 | 75.0 | 75.0 |
| Viscosity of composition at 25°C (mPa·s) | | | | | | 119 | 130 | 140 | 150 | 214 | 160 | 230 | 270 | 930 | 388 | 1100 | 400 | 390 |
| Evaluation results | | Migration resistance (2) | | | | 3 | 3 | 4 | 4 | 5 | 3 | 4 | 5 | 5 | 5 | 5 | 5 | 5 |
| | | Abrasion resistance | | | | 4 | 4 | 3 | 2 | 2 | 4 | 4 | 4 | 4 | 4 | 4 | 3 | 4 |
| | | Gloss | | | | 4 | 3 | 3 | 3 | 2 | 3 | 4 | 4 | 3 | 3 | 2 | 1 | 3 |
| | | Solvent resistance (2) | | | | 3 | 3 | 2 | 1 | 1 | 3 | 3 | 4 | 5 | 5 | 5 | 5 | 5 |
| | | Adhesion | | | | 4 | 3 | 2 | 2 | 2 | 4 | 5 | 5 | 5 | 5 | 5 | 5 | 5 |

**[Table B1-1] Table B1 (continued)**

| | | Weight average molecular weight | Molecular weight distribution (%) | | | Example B | | | | | | | | | | | | | |
|---|---|---|---|---|---|---|---|---|---|---|---|---|---|---|---|---|---|---|---|
| | | | (I) less than 500 | (II) at least 500 | (III) at least 1,000 | 14 | 15 | 16 | 17 | 18 | 19 | 20 | 21 | 22 | 23 | 24 | 25 | 26 | 27 |
| | Miramer M3190 (TMP(EO)9TA) | 823 | 15.4 | 84.6 | 20.4 | 23.3 | 21.8 | 20.6 | 22.6 | 22.6 | 22.6 | 22.6 | 23.6 | 23.5 | 23.2 | 21.7 | 20.6 | 22.8 | |
| | Miramer M3150 (TMP(EO)15TA) | 1254 | 3.9 | 96.1 | 59.6 | | | | | | | | | | | | | | |
| | AT-20E (TMP(EO)20TA) | 1442 | 2.1 | 97.9 | 85.1 | | | | | | | | | | | | | | |
| | EBECRYL 824 (polyester acrylate) | 692 | 42.1 | 57.9 | 18.9 | | | | | | | | | | | | | | |
| (A) | EBECRYL 837 (polyester acrylate) | 1584 | 27.8 | 72.2 | 43.8 | | | | | | | | | | | | | | |
| | EBECRYL 820 (polyester acrylate) | 2347 | 21.4 | 78.6 | 55.5 | 75.0 | 75.0 | 75.0 | 75.0 | 75.0 | 75.0 | 75.0 | 75.0 | 75.0 | 75.0 | 75.0 | 75.0 | 75.0 | 97.6 |
| | EBECRYL 450 (polyester acrylate) | 2737 | 28.1 | 71.9 | 62.5 | | | | | | | | | | | | | | |
| | EBECRYL 8210 (aliphatic urethane acrylate) | 733 | 57.4 | 42.6 | 24.8 | | | | | | | | | | | | | | |
| | EBECRYL 8409 (aliphatic urethane acrylate) | 1455 | 7.6 | 92.4 | 68.0 | | | | | | | | | | | | | | |
| (B) | SST-1 MG-RC (average particle size: 1µm) | | | | | | | | 1.0 | | | | | | | | | | |
| | Ceraflour 981 (average particle size: 3 µm) | | | | | | | | | 1.0 | | | | | | | | | |
| | Ceraflour 991 (average particle size: 5 µm) | | | | | 1.0 | 1.0 | 1.0 | | | | | | 0.1 | 0.4 | 1.9 | 3.0 | 1.0 | 1.0 |
| | Ceraflour 997 (average particle size: 7 µm) | | | | | | | | | | 1.0 | | | | | | | | |
| | Ceraflour 970 (average particle size: 9 µm) | | | | | | | | | | | 1.0 | | | | | | | |
| (C) | TEGO Rad 2300 ((meth)acrylic-modified silicone-based compound) | | | | | 0.3 | 1.8 | 3.0 | 1.0 | 1.0 | 1.0 | 1.0 | 1.0 | 1.0 | 1.0 | 1.0 | 1.0 | 1.0 | 1.0 |
| | TEGO GLIDE 100 (unreactive silicone-based compound) | | | | | 0.2 | 0.2 | 0.2 | 0.2 | 0.2 | 0.2 | 0.2 | 0.2 | 0.2 | 0.2 | 0.2 | 0.2 | | 0.2 |
| Genorad 24 (polymerization inhibitor) | | | | | | 0.2 | 0.2 | 0.2 | 0.2 | 0.2 | 0.2 | 0.2 | 0.2 | 0.2 | 0.2 | 0.2 | 0.2 | 0.2 | 0.2 |
| Total | | | | | | 100.0 | 100.0 | 100.0 | 100.0 | 100.0 | 100.0 | 100.0 | 100.0 | 100.0 | 100.0 | 100.0 | 100.0 | 100.0 | 100.0 |
| Amount of (meth)acrylate compound with molecular weight of 500 or more (% of total mass of composition) | | | | | | 78.7 | 77.4 | 76.4 | 78.1 | 78.1 | 78.1 | 78.1 | 78.9 | 78.8 | 78.6 | 77.3 | 76.4 | 78.2 | 76.7 |
| Amount ot (meth)acrylate compound with molecular weight ot less than 500 (% of total mass of composition) | | | | | | 19.6 | 19.4 | 19.2 | 19.5 | 19.5 | 19.5 | 19.5 | 19.7 | 19.7 | 19.6 | 19.4 | 19.2 | 19.6 | 20.9 |
| Amount of TMP alkylene oxide-modified tri(meth)acrylate (% of total mass of composition) | | | | | | 23.3 | 21.8 | 20.6 | 22.6 | 22.6 | 22.6 | 22.6 | 23.6 | 23.5 | 23.2 | 21.7 | 20.6 | 22.8 | 0.0 |
| Amount of TMP alkylene oxide-modified tri(meth)acrylate with molecular weight of 1,000 or more (% of total mass of composition) | | | | | | 4.8 | 4.5 | 4.2 | 4.6 | 4.6 | 4.6 | 4.6 | 4.8 | 4.8 | 4.7 | 4.4 | 4.2 | 4.7 | 0.0 |
| Amount of urethane (meth)acrylate, polyester (meth)acrylate, and epoxy (meth)acrylate (% of total mass of composition) | | | | | | 75.0 | 75.0 | 75.0 | 75.0 | 75.0 | 75.0 | 75.0 | 75.0 | 75.0 | 75.0 | 75.0 | 75.0 | 75.0 | 97.6 |
| Viscosity of composition at 25°C (mPa·s) | | | | | | 400 | 405 | 410 | 400 | 400 | 400 | 410 | 400 | 390 | 390 | 400 | 400 | 410 | 700 |
| Evaluation results | | Migration resistance (2) | | | | 5 | 5 | 5 | 5 | 5 | 5 | 5 | 5 | 5 | 5 | 5 | 5 | 5 | 5 |
| | | Abrasion resistance | | | | 4 | 4 | 4 | 2 | 3 | 4 | 5 | 1 | 2 | 3 | 4 | 5 | 4 | 4 |
| | | Gloss | | | | 3 | 3 | 3 | 4 | 4 | 3 | 2 | 5 | 4 | 4 | 3 | 2 | 2 | 2 |
| | | Solvent resistance (2) | | | | 5 | 4 | 3 | 5 | 5 | 5 | 5 | 5 | 5 | 5 | 5 | 5 | 5 | 5 |
| | | Adhesion | | | | 5 | 5 | 5 | 5 | 5 | 5 | 5 | 4 | 4 | 5 | 5 | 5 | 5 | 5 |

**[Table B2] Table B2**

| | | Weight average molecular weight | Molecular weight distribution (%) | | | Comparative Example B | | | | |
|---|---|---|---|---|---|---|---|---|---|---|
| | | | (I) less than 500 | (II) at least 500 | (III) at least 1,000 | 1 | 2 | 3 | 4 | 5 |
| | Miramer M300 (TMPTA) | 336 | 83.1 | 16.9 | 2.4 | 97.6 | | | | |
| | TPCDA | 242 | 96.7 | 3.3 | 0.1 | | 97.6 | | | |
| | Miramer M3130 (TMP(EO)3TA) | 449 | 75.9 | 24.1 | 3.9 | | | 97.6 | | |
| | EBECRYL LEO 10501 (TMP(EO)3TA) | 504 | 63.5 | 36.5 | 5.8 | | | | 97.6 | |
| | Miramer M3160 (TMP(EO)6TA) | 637 | 37.6 | 62.4 | 10.7 | | | | | 97.6 |
| | Miramer M3190 (TMP(EO)9TA) | 823 | 15.4 | 84.6 | 20.4 | | | | | |
| | Miramer M3150 (TMP(EO)15TA) | 1254 | 3.9 | 96.1 | 59.6 | | | | | |
| (A) | AT-20E (TMP(EO)20TA) | 1442 | 2.1 | 97.9 | 85.1 | | | | | |
| | EBECRYL 824 (polyester acrylate) | 692 | 42.1 | 57.9 | 18.9 | | | | | |
| | EBECRYL 837 (polyester acrylate) | 1584 | 27.8 | 72.2 | 43.8 | | | | | |
| | EBECRYL 820 (polyester acrylate) | 2347 | 21.4 | 78.6 | 55.5 | | | | | |
| | EBECRYL 450 (polyester acrylate) | 2737 | 28.1 | 71.9 | 62.5 | | | | | |
| | EBECRYL 8210 (aliphatic urethane acrylate) | 733 | 57.4 | 42.6 | 24.8 | | | | | |
| | EBECRYL 8409 (aliphatic urethane acrylate) | 1455 | 7.6 | 92.4 | 68.0 | | | | | |
| (B) | SST-1 MG-RC (average particle size: 1µm) | | | | | | | | | |
| | Ceraflour 981 (average particle size: 3 µm) | | | | | | | | | |
| | Ceraflour 991 (average particle size: 5 µm) | | | | | 1.0 | 1.0 | 1.0 | 1.0 | 1.0 |
| | Ceraflour 997 (average particle size: 7 µm) | | | | | | | | | |
| | Ceraflour 970 (average particle size: 9 µm) | | | | | | | | | |
| (C) | TEGO Rad 2300 ((meth)acrylic-modified silicone-based compound) | | | | | 1.0 | 1.0 | 1.0 | 1.0 | 1.0 |
| | TEGO GLIDE 100 (unreactive silicone-based compound) | | | | | 0.2 | 0.2 | 0.2 | 0.2 | 0.2 |
| Genorad 24 (polymerization inhibitor) | | | | | | 0.2 | 0.2 | 0.2 | 0.2 | 0.2 |
| Total | | | | | | 100.0 | 100.0 | 100.0 | 100.0 | 100.0 |
| Amount of (meth)acrylate compound with molecular weight of 500 or more (% of total mass of composition) | | | | | | 16.5 | 3.2 | 23.5 | 35.6 | 60.9 |
| Amount of (meth)acrylate compound with molecular weight of less than 500 (% of total mass of composition) | | | | | | 81.1 | 94.4 | 74.1 | 62.0 | 36.7 |
| Amount of TMP alkylene oxide-modified tri(meth)acrylate (% of total mass of composition) | | | | | | 0.0 | 0.0 | 97.6 | 97.6 | 97.6 |
| Amount of TMP alkylene oxide-modified tri(meth)acrylate with molecular weight of 1,000 or more (% of total mass of composition) | | | | | | 0.0 | 0.0 | 3.8 | 5.7 | 10.4 |
| Amount of urethane (meth)acrylate, polyester (meth)acrylate, and epoxy (meth)acrylate (% of total mass of composition) | | | | | | 0.0 | 0.0 | 0.0 | 0.0 | 0.0 |
| Viscosity of composition at 25°C (mPa·s) | | | | | | 91 | 25 | 60 | 73 | 80 |
| Evaluation results | | Migration resistance (2) | | | | 1 | 1 | 1 | 1 | 2 |
| | | Abrasion resistance | | | | 5 | 4 | 5 | 5 | 5 |
| | | Gloss | | | | 5 | 5 | 5 | 5 | 4 |
| | | Solvent resistance (2) | | | | 5 | 3 | 5 | 5 | 5 |
| | | Adhesion | | | | 4 | 4 | 3 | 3 | 3 |

As is shown above, it was evident that in the electron beam-curable compositions that represent embodiments of the present invention (the examples), excellent migration resistance was able to be realized. Further, it was also evident that by adjusting the types and amounts of the (meth)acrylate monomers used in the electron beam-curable composition, favorable results could also be achieved for various coating film characteristics such as the pinhole properties, gloss, adhesion, abrasion resistance and solvent resistance. Accordingly, by using the electron beam-curable composition of an embodiment of the present invention, printed items can be provided for which external migration of unreacted components that exist within the cured coating film can be suppressed, and which also exhibit excellent coating film characteristics.

## Claims

1. An electron beam-curable composition comprising a (meth)acrylate component (A) containing one or more (meth)acrylate compounds (but excluding silicone-modified compounds), wherein
the (meth)acrylate component (A) contains a (meth)acrylate compound (A-1) having a molecular weight of 500 or greater, and the amount of the (meth)acrylate compound (A-1) is at least 70% by mass of the total mass of the composition, and
in the (meth)acrylate component (A), the amount of (meth)acrylate compounds having a molecular weight of less than 500 is less than 25% by mass of the total mass of the composition.

2. The electron beam-curable composition according to Claim 1, wherein the (meth)acrylate compound (A-1) includes at least one compound selected from the group consisting of trimethylolpropane alkylene oxide-modified tri(meth)acrylates, urethane (meth)acrylates, polyester (meth)acrylates, and epoxy (meth)acrylates.

3. The electron beam-curable composition according to Claim 1 or 2, wherein the (meth)acrylate compound (A-1) includes a trimethylolpropane alkylene oxide-modified tri(meth)acrylate in an amount of at least 50% by mass of the total mass of the composition.

4. The electron beam-curable composition according to Claim 3, wherein in the (meth)acrylate compound (A-1), an amount of the trimethylolpropane alkylene oxide-modified tri(meth)acrylate having a molecular weight of 1,000 or greater is less than 35% by mass of the total mass of the composition.

5. The electron beam-curable composition according to Claim 1 or 2, wherein the (meth)acrylate compound (A-1) includes at least one compound selected from the group consisting of urethane (meth)acrylates, polyester (meth)acrylates and epoxy (meth)acrylates in an amount of at least 50% by mass of the total mass of the composition.

6. The electron beam-curable composition according to any one of Claims 1 to 5, further comprising a solid wax (B).

7. The electron beam-curable composition according to Claim 6, wherein an average particle size of the solid wax (B) is within a range from 2 to 8 µm.

8. The electron beam-curable composition according to Claim 6 or 7, wherein an amount of the solid wax (B) is within a range from 0.1 to 3.0% by mass of the total mass of the composition.

9. The electron beam-curable composition according to any one of Claims 1 to 8, wherein a viscosity of the electron beam-curable composition at 25°C is not more than 1,000 Pa·s.

10. The electron beam-curable composition according to any one of Claims 1 to 9, further comprising a (meth)acrylic-modified silicone-based compound.

11. The electron beam-curable composition according to Claim 10, wherein an amount of the (meth)acrylic-modified silicone-based compound is within a range from 0.1 to 2.0% by mass of the total mass of the composition.

12. The electron beam-curable composition according to any one of Claims 1 to 11, further comprising an unreactive silicone-based compound.

13. The electron beam-curable composition according to Claim 12, wherein an amount of the unreactive silicone-based compound is within a range from 0.1 to 2.0% by mass of the total mass of the composition.

14. The electron beam-curable composition according to any one of Claims 1 to 13, wherein the composition comprises substantially no photopolymerization initiator.

15. The electron beam-curable composition according to any one of Claims 1 to 14, wherein the composition is used as an electron beam-curable overcoat varnish.

16. The electron beam-curable composition according to Claim 15, wherein the composition is used in forming a surface layer of a food packaging material.

17. A food packaging material comprising a substrate, and a surface layer provided on top of the substrate, wherein the surface layer is a cured layer of the electron beam-curable composition according to Claim 16.
